(19) Europäisches Patentamt
European Patent Office
Office européen des brevets

(11) Publication number: 0 587 104 A2

# (12) EUROPEAN PATENT APPLICATION

(21) Application number: **93114304.4**

(22) Date of filing: **07.09.93**

(51) Int. Cl.5: **C08J 3/00**, C08K 3/00, C08K 5/10, C08L 27/06, C08K 13/02

(30) Priority: **09.09.92 US 942557**

(43) Date of publication of application: **16.03.94 Bulletin 94/11**

(84) Designated Contracting States: **AT BE CH DE DK ES FR GB GR IE IT LI LU MC NL PT SE**

(71) Applicant: **The Geon Company**
**6100 Oak Tree Boulevard**
**Cleveland, Ohio 44131(US)**

(72) Inventor: **Greenlee, William Samuel**
**31626 Electric Boulevard**
**Avon Lake, Ohio 44012(US)**

(74) Representative: **von Kreisler, Alek, Dipl.-Chem. et al**
**Patentanwälte**
**von Kreisler-Selting-Werner**
**Bahnhofsvorplatz 1 (Deichmannhaus)**
**D-50667 Köln (DE)**

## (54) Improved rigid smoke supressed polyvinyl chloride compounds.

(57) Improved PVC compounds formulated for exhibiting low smoke generation and having high processing stability and impact resistance comprising polyvinyl chloride, an effective amount of at least one smoke suppressant selected from the group consisting of molybdenum, iron, copper, zinc, vanadium, lithium, sodium, potassium, magnesium, calcium, barium, zirconium, manganese, phosphorous, aluminum, chromium, boron, tin and titanium based smoke suppressants, including mixtures, and a lubricant system comprising an ester of a long chain carboxylic acid, a chemically modified paraffin wax, and alkyl ester of an alkyl polyol, and optionally a $C_8$ to $C_{30}$ substituted or unsubstituted carboxylic acid and a hydrocarbon wax. The compounds disclosed exhibit an improved combination of properties for a rigid compound exhibiting a heat distortion temperature of at least 60 ° C, including dynamic thermal stability, impact strength and reduced smoke density in both the flaming and non-flaming mode per NFPA 258. Preferably, an impact modifier system is included and is selected from the group consisting of an acrylic polymeric impact modifier, an MBS impact modifier, and an ABS impact modifier. A primary stabilizer is included and a preferred stabilizer system comprises a tin compound and a co-stabilizer selected from epoxidized materials. The compounds are useful substitutes for engineering thermoplastics in large and/or intricate shaped articles including shower stalls, wall panels, tub enclosures, refrigerator panels, appliance housings, electrical housings, sporting equipment, plumbing ware, automotive components, business machine components and housings.

EP 0 587 104 A2

## FIELD OF THE INVENTION

This disclosure pertains to the field of rigid, smoke suppressed thermoplastic polyvinyl halide compounds. In particular, polyvinyl chloride compound lubrication systems formulated for high processibility and physical properties. Compounds disclosed have a heat distortion temperature (HDT) under 66 psi load of greater than 58°C are disclosed. The compounds are processible under high work loads such as in extrusion and injection molding and can be used for forming large and/or intricate extrusions or molded articles while they exhibit a combination of high modulus, and high impact strength with reduced smoke generation.

## BACKGROUND OF THE INVENTION

Smoke suppressed polyvinyl chloride alloys exhibiting high heat distortion temperatures are receiving increased commercial interest as low cost alternatives to traditional engineering thermoplastics particularly in construction and transportation applications requiring adherence to standards established under model building codes (BOCA, ICBO, SBCC, etc.), mobile home standards, and various housing and transportation agencies, for example The Department of Transportation, The Federal Aviation Administration, and HUD.

In order to meet standards such as promulgated under the aforementioned organizations, particularly those which incorporate ANSI standards following ASTM E-662, or E-162 standards for flame and smoke generation, the presence of effective amounts of smoke suppressant in polyvinyl chloride compounds presents problems primarily due to the loss of desired processing stability and physical properties. Because rigid PVC has a workable melt viscosity very near its degradation temperature, these compounds must be processed under mechanical work load which leads to damaging shear heating. Under this work load during melt processing, conventional compounding systems in conjunction with smoke suppressant systems have a limited processing window. With a limited process window, the size and /or intricacy of articles produced therefrom is limited because the process required to form these articles exceeds the capability of the compound. These limitations are particularly prominent in the extrusion or molding of large surface area, rigid PVC-based articles such as sheets having a width of higher than about 30 inches. Those large and/or intricate articles derived from a smoke suppressed PVC compound which has an HDT of greater than 58°C at 66 psi are particularly difficult or impossible to manufacture due to the relatively high viscosity and narrow stability window.

Conventional remedies have not lead to complete success due to the loss of certain properties. Specifically a conventional approach directed to boosting lubrication resulted in poorer physical properties and loss of smoke suppression, for example. The presence of smoke suppressant generally lowers stability time, impact strength, as well as, leading to inconsistent impact strength of the product throughout the commercial manufacturing process, and this is not acceptable for many applications. Bearing in mind the requirement of maintaining HDT above about 58°C at 66 psi, the obvious approach of increasing the overall content of stabilizers, lubricant, and impact modifiers can lead to regaining DTS and impact performance properties but at the expense of loss in smoke suppression and HDT.

There are further drawbacks to straightforward approaches in solving the problem. Higher levels of stabilizer, for example, can have negative effects on the heat distortion temperature of the compound. It has also been observed that increasing the level of impact modifier per se can have negative effects on HDT, smoke generation, and dynamic thermal stability. Whereas, dynamic thermal stabilization is interdependent not only on the thermal stabilizer system but also the lubrication system and impact modifier system, the lubricant, impact and stabilizer systems generally have negative effects on heat distortion temperature. Moreover, stabilizers, lubricants and impact modifiers interfere to a significant extent with each other in attaining a desirable balance of properties. Thus, one impact modifier, lubricant or stabilizer system suggested for rigid PVC in general is not predictive of successful utilization in a smoke suppressed PVC compound, that is, not predictive of improvements in all three critical performance attributes while maintaining the most desirable reduction in smoke density. The needed additives for overcoming deficiencies in a rigid, smoke suppressed thermoplastic PVC compound have significant negative secondary effects, such effects not being predictable by extrapolation of known compounding approaches. Avoidance of this interference and the achievement of the aforementioned balance of improvements are desired.

Flame retardant, low smoke, flexible compounds of polyvinyl chloride are contrasted with rigid compounds. Rigid compounds exhibit a tensile modulus in excess of 100,000 psi and typically in excess of 300,000 psi. Flexible compounds possess an inherently wider processing window than rigid compounds as far less shear heating is developed. For flexible compounds, plasticizers are flexibilizers which boost melt flow and impact strength while lowering melt viscosity. The inherently superior dynamic thermal stability of

flexible compounds presents no practical limitation for producing large or high surface area articles. Moreover, certain recommended flame retarding materials used as flexibilizers aid in reducing the flame and smoke tendencies. In a rigid compound, these components can not be incorporated to any significant extent because of the necessary loss in HDT. The prior art has not dealt in detail with how to meet reductions in smoke density in rigid PVC while overcoming the loss in processing stability and impact performance due to the presence of particulate smoke suppressant(s). Recovering the sacrifice in the melt processing window and impact strength of rigid polyvinyl chloride formulated for low smoke requirements is sought. Commercial value is derived from balance of the aforementioned properties, namely, maintaining high heat distortion temperature (HDT), impact strength (VHIT or IZOD) and dynamic thermal stability (DTS) in a smoke suppressed rigid PVC compound.

Therefore, it would be of significant commercial importance to provide rigid PVC compounds exhibiting reduced smoke density, improved processibility and impact resistance. Extensive studies aimed at this objective have been undertaken with the result that lubricant systems have been found in combination with impact and thermal stabilizing systems which together impart a balance of performance in terms of achieving processing stability, HDT and impact strength, while maintaining acceptable smoke density required by many commercial product standards.

## SUMMARY OF THE INVENTION

The smoke suppressed polyvinyl chloride compounds of this invention exhibit an unannealed HDT under a 66 psi load of greater than 58°C and exhibit an improved balance of variable height impact strength (VHIT), IZOD impact strength, processibility as measured by dynamic thermal stability (DTS) and smoke density under testing conditions specified in ASTM E-662. These aspects are achieved for one embodiment rigid thermoplastic PVC compound by incorporation of an effective amount of a smoke suppressant, an impact modifier, stabilizer and a lubricant system comprising a specified combination of at least one ester of a $C_6$ to $C_{25}$ carboxylic acid (ester wax), a chemically modified paraffin, and an ester of an alkyl polyol. The polyol ester is specified in amounts most preferably at from 1.2 to 2.8 parts by weight per 100 weight parts of PVC (phr), the chemically modified paraffin is specified preferably at from 0.25 to 0.75 phr, and the ester wax is specified most preferably at from 0.7 to 1.5 phr. Preferably a long chain carboxylic acid is included. More preferably a hydrocarbon wax is also included and the total amount of lubricant on a weight basis present ranges most preferably from 3 to 7.5 phr. A preferred stabilizer system is selected from the group consisting of tin, lead, barium, cadmium, zinc, and calcium containing stabilizers, with the tin based stabilizers being most preferred and a co-stabilizer, the most preferred co-stabilizer being an epoxide containing material.

In another aspect of the invention, a rigid PVC compound is described containing a modified particulate molybdenum compound as the sole smoke retardant and exhibiting improved physical properties, particularly overcoming a loss of impact strength during commercial manufacture. The modification is achieved in a method of using a means for limiting of the fraction of particles having a particle diameter in excess of 10 microns (10 μ out-sized) to less than 7%, as measured by a Micromeritics, Inc. Sedigraph® analyzer. The Means for controlling the outsized fraction include gringing and milling, and in particular, jet milling. The preferred method is the reduction in the fraction of outsized molybdenum particles in excess of 6 microns (6 μ out-sized) to 6%. In a still more preferred method the, smoke suppression is improved by the method of incorporating along with a smoke suppressant, a blend of two polyvinyl chloride polymers having differing molecular weights, wherein the higher molecular weight PVC is present in an amount of less than 25 parts per 100 weight parts of the PVC blend. There was also found a method of improving the physical properties of a smoke suppressed PVC compound by incorporating a lubricating acrylic processing aid. In yet another embodiment embodiment it was found that impact strength was improved while not sacrificing smoke suppression by the incorporation of from 2 to less than about 10 phr of $CaCO_3$ in a smoke suppressed PVC compound containing a polyol ester. The most preferred smoke suppressant is a molybdenum compound, particularly an organo molybdate such as melamine molybdate.

In another aspect of the invention, a rigid PVC compound containing a copper carboxylate and exhibiting a balance of improvements in impact strength and smoke reduction, while maintaining HDT and DTS. This aspect is achieved for a compound comprising PVC, a molybdenum compound, and a copper carboxylate preferably containing less than 30 percent particles having diameter greater than 10 microns, and wherein the ratio of molybdate to copper carboxylate is from 4:1 to 2:1.

## DETAILED DESCRIPTION

In general, the components of the preferred embodiments of the compounds of the present invention are polyvinyl chloride, smoke suppressant, impact modifier, a lubricant system and a primary stabilizer. Optional ingredients are co-stabilizer, pigment, filler, other lubricants, fibrous filler, static dissipative additive, colorant, antioxidant, and anti-fogging agent, etc.. In particular, preferred embodiments of the invention comprise polyvinyl chloride homopolymer, an impact modifier selected from the group consisting of acrylic impact modifier, a methylmethacrylate-butadiene-styrene impact modifier and an acrylonitrile-butadiene-styrene impact modifier, a tin stabilizer, an epoxidized oil, and a lubrication system comprising an ester of a fatty acid, preferably an ester of a $C_{16}$ - $C_{18}$ carboxylic acid, a chemically modified paraffin wax, and an ester of an alkyl polyol, preferably a mono, di- or tri- $C_{16}$ to $C_{18}$ alkyl ester of glycerol.

Rigid compounds of this invention are distinguished from non-rigid compounds. Rigid compounds of this invention conform to the definition of ASTM D-883 for rigid plastics that have a modulus of elasticity, either in flexure or in tension, greater than 700 MPA (100,000 psi) at 23 °C and 50% relative humidity when tested in accordance with either ASTM Method D-747 - Test for Stiffness of Plastics by Means of a Cantilever Beam, ASTM Methods D-790 - Test for Flexural Properties of Plastics and Electrical Insulating Materials, ASTM Method D-638 - Test for Tensile Properties of Plastics, or ASTM Methods D-882 - Test for Tensile Properties of Thin Plastic Sheeting (1983). The compounds of this invention exhibit a modulus of elasticity of at least 100,000 PSI, preferably at least 200,000 PSI and most preferably at least 300,000 PSI. The compounds of this invention have an unannealed HDT at 66 PSI greater than about 58 °C, preferably at least 60 °C, more preferably at least 64 °C and most preferably at least 66 °C.

Polyvinyl chloride polymers are well known and commercially available worldwide. Polyvinyl chloride polymers contemplated for use in the present invention include those prepared in a variety of ways. PVC polymers can be prepared by polymerization methods including: mass, suspension, dispersion, and emulsion processes. A mass process is described in U.S. Patent No. 3,522,227. A phase inversion process may also be used and is disclosed in U.S. Patent No. 3,706,722. A useful skinless, suspension PVC resin is taught in U.S. Patent No. 4,711,908, in particular example 4 in that disclosure. The preparation of porous, skinless, crosslinked PVC resin can be prepared with the direction of U.S. Patent No. 4,755,699, with particular reference to example 1 of that disclosure. Preferably, PVC used herein is suspension PVC or mass PVC. Suspension or mass PVC resin used herein is a particulate homopolymer or rigid copolymer resin having a particle size average ranging from about 70 microns to 250 microns. Suitable comonomers that may be included in amounts of less than 50 weight percent of total monomers in the polymer include but are not limited to the olefins like ethylene, propylene, and butylene; unsaturated carboxylic acids such as acrylic acid, methacrylic acid, ethacrylic acid, $\alpha$-cyanoacrylic acid, and the like; esters of acrylic acid, for example, methyl acrylate, ethyl acrylate, butyl acrylate, ethylhexyl acrylate, octyl acrylate, cyanoethyl acrylate, 2-carboxyethyl acrylate, ethoxyethyl acrylate, hydroxyethyl acrylate, and the like; vinyl esters such as vinyl acetate and vinyl propionate; esters of methacrylic acid, such as methyl methacrylate, ethyl methacrylate, butyl methacrylate, and the like; nitriles, such as acrylonitrile and methacrylonitrile; acrylamides, such as methyl acrylamide, N-methylol acrylamide, N-butoxy methacrylamide, and the like; halogen containing vinyl monomers such as vinyl fluoride, vinylidene chloride, 1,2-dichloroethylene, vinylidene fluoride, and vinyl bromide; vinyl ethers such as ethylvinyl ether, chloroethyl vinyl ether and the like; the vinyl ketones, styrene and derivatives including $\alpha$-methyl styrene, vinyl toluene, chlorostyrene; vinyl naphthalenes; cross-linking monomers such as diallyl phthalate, trimethylol propane triacrylate, allyl methacrylate and the like; allyl and vinyl chloroacetate, vinyl pyridine, and methyl vinyl ketone; and any vinyl chloride copolymerizable monomer or mixtures of monomers having suitable reactivity ratios with vinyl chloride and known to those skilled in the art. Particularly preferred for the major component of the PVC continuous matrix phase are polyvinyl chloride homopolymers substantially free of gel particles and crosslinks.

The inherent viscosity (I.V.) (ASTM D-1243) of the continuous phase, or matrix polyvinyl chloride used in this invention generally ranges from about 0.2 to about 4.0, with a preferred I.V. range of from about 0.3 to about 2 and a more preferred I.V. range of from about 0.4 to about 1.4. The most preferred I.V. range is from 0.4 to 0.95. Two PVC polymers each having a different average molecular weight can be employed. In a preferred PVC blend, a minor component PVC has an I.V. of from 0.1 to about 2.0 units higher than the major component PVC, preferably 0.15 to 1.0, and most preferably from 0.15 to 0.35 I.V. units higher. The higher I.V. resin is desirably present at less than 25 weight parts per 100 weight parts of the PVC blend, preferably 1 to 25 parts, more preferably from 1 to 10 phr and most preferably 3 to 7 weight parts per 100 weight parts of the PVC blend. When combined in this manner, it is more preferred that the I.V. of the minor component PVC will be about 0.15 I.V. to 1.0 units higher, and most preferably at least from about 0.15 to

0.35 units higher than the I.V. of the polyvinyl chloride used in the major amount. The preferred I.V. for the minor component PVC is from about 0.8 to about 2.0 I.V. There can be a blend of crosslinked and uncrosslinked PVC. In a compound using only a single PVC polymer, the preferred I.V. range is from 0.4 to 0.95. The I.V. is measured for PVC using cyclohexanone as the solvent according to ASTM D-1243.

Generally, the PVC compounds herein will contain a primary thermal stabilizer. Primary stabilizers include compounds based on tin, lead, antimony, barium, cadmium, zinc, and calcium. The preferred primary thermal stabilizer system employed herewith is based on tin, with the organotin types being more preferred. A combination of a primary stabilizer like an organotin compound and a co-stabilizer can be used. The organotins include but are not limited to dimethyl tin-bis isooctylthioglycolate (methyltin), di-butyltin-bis-isooctylthioglycolate (butyltin), di-octyltin-bis isooctylthioglycolate, dialkyl tin di-carboxylates, methyltin mercaptides, butyltin mercaptides, dialkyl tin bis(alkyl mercaptocarboxylate) including di-n-octyltinS-S,S'-bis(isooctyl mercaptoacetate), and butylthiostannoic acid, and mixtures thereof. The preferred stabilizer system is an organotin compound and epoxide co-stabilizer. There may be included any other heat stabilizers such as derivatives of barium, cadmium, calcium, and zinc, however these are not necessary. The preferred level of primary stabilizer ranges from 0.1 to 20 phr, more preferred from 0.5 to 10 phr, and most preferred from 1.5 to 8 phr. phr, more preferred from 0.5 to 10 phr, and most preferred from 1.5 to 8 phr.

Co-stabilizers may be employed, for example, phosphite stabilizers, polymeric phosphites, thioesters such as dilauryl thiodipropionate, beta-diketones and epoxy materials. Compounds containing at least one oxirane group (epoxy materials) are preferred co-stabilizers and include liquids or solid resins in the uncured state which contain one or more epoxide groups. Epoxy materials include the bisphenol A derivatives such as the reaction product of epichlorohydrin and bisphenol A. Liquid epoxy materials include diglycidylether of bisphenol A, having molecular weight above about 370. Epoxy resins are generally prepared by reacting a dihydric phenol with epichlorohydrin in alkaline solution. These products are of resinous character and frequently are solid materials at temperatures between 20°-30°C. Any of the various dihydric phenols are used in preparing glycidyl ethers, including mononuclear phenols like resorcinol, catechol, hydroquinone, etc., or polynuclear phenols like bis(4-hydroxyphenyl)-2, 2-propane (bis phenol-A), 4,4'-dihydroxy benzophenone, bis-(4-hydroxphenyl)-1, 1-ethane-bis-(4-hydroxphenyl)-1, 1-isobutane-bis-(4-hydroxyphenyl)-2, 2-butane-bis-(4-hydroxy-2-methylphenyl)-2, 2-propane-bis-(hydroxy-2-methylphenyl)-2, 2-propane-bis-(hydroxy-2-tertiary butyl phenyl)2, 2-propane-bis- (2-dihydroxynaphthyl)-methane, 1,5-dihydroxynaphthalene, etc. There may be epoxy ethers represented by the formula:

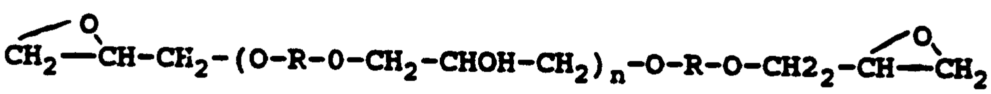

There can be used epoxy materials derived from 1,2-epoxy-containing polyethers of mono- or polyhydric alcohols, such as the mono- and diglycidyl ethers of ethylene glycol, propylene glycol, trimethylene glycol, diethylene glycol, triethylene glycol, glycerol, dipropylene glycol and the like. Other typical ethers of this class include glycidyl ethers of polyhydric alcohols having a 1, 2-epoxy equivalency greater than one, such as the polyglycidyl ethers of glycol, diglycerol, erythritol, pentaglycerol, mannitol, sorbitol, and the like.

In general, a glycidyl ether resin will have an epoxy equivalency equal to or greater than 1 and usually not more than about 2. The epoxy equivalency is defined as the number of epoxy groups per molecule.

A variety of commercial sources for epoxy materials are listed in Chemical Week Buyers' Guide October, 1990. One example of an epoxy material is sold under the Epon® trademark of Shell Chemical Co., Inc.. Preferred epoxy materials are epoxidized vegetable oils and epoxidized fats, such as, epoxidized soya oil, epoxidized rapeseed oil, epoxidized linseed oil, epoxidized tall oil, epoxidized butyl tallate, epoxy cyclohexyl adipate, octyl epoxy stearate, 2-ethylhexyl epoxy tallate, and epoxy glyceryl oleate dilinoleate. Co-stabilizer may be present at from 0.1 to 10 weight parts, preferably from 0.1 to about 5 phr, more preferably from 0.75 to 3.0 phr (weight parts per 100 weight parts of PVC) and most preferably from 1 to 2 phr.

Antioxidants are optionally present and include the various hindered alkylated phenolics such as 2,6-di-t-butyl-4-methyl phenol also referred to as butylated hydroxy toluene, bis-phenols such as 2,2'-methylenebis(4-methyl-6-t-butylphenol), thio-phenols such as 4,4'-dihydroxydiphenyl sulfide, otherwise referred to as thiodiphenol, and di-phenyl ethers such as 4,4'-dihydroxydiphenyl ether, and mixtures thereof. When used, antioxidants are generally present in an amount from about 0.05 to 5 parts per hundred weight parts PVC (phr) and preferably when present are at from 0.1 to 1.0 phr.

Preferably at least one polymeric impact modifier is used. The impact modifier system preferably does not include chlorinated polyethylene. The preferred principal types of polymeric impact modifiers are acrylic, MBS and ABS with acrylic being most preferred. The principal embodiments of MBS types are graft or multi-stage copolymers of methylmethacrylate, butadiene, and styrene, typically methylmethacrylate and styrene grafted to polybutadiene; the principal embodiments of ABS types are graft or multi-stage copolymers of acrylonitrile, butadiene, and styrene, typically acrylonitrile and styrene grafted to polybutadiene, with methylmethacrylate an optional comonomer (MABS). MBS impact modifiers generally contain a rubbery phase component, the particulars of this phase being beyond the scope of the invention. The MBS, ABS and acrylic polymeric impact modifiers useful herein are sometimes referred to as multistage polymers. Various preferred rubbery phases (or stages) include polymers derived from 1,3-butadiene, isoprene, acrylates, olefins, styrene, or mixtures so long as the rubbery polymer exhibits a Tg of less than zero °C. Preferably the Tg of the rubbery core polymer is below -30°C. The rubbery polymer is usually present during the polymerization of the second stage, typically comprising styrene and methyl methacrylate for MBS types or acrylonitrile and styrene for ABS types. Commercial embodiments of MBS include Paraloid® KM-653 and BTA-733 from Rohm and Haas, Inc., and Kane-ace® B-56 and B-22 available from Kanegafuchi, Inc. Commercial ABS impact modifiers are available from GE Plastics, Inc. under the Blendex® trademark, such as Blendex® 310 and Blendex® 338. MBS impact modifier is suggested at a level of from 0 to 20 phr, preferably 0 to less than 15 phr, and most preferably 0 to about 8 phr because of the direct negative effects on HDT, smoke density and DTS in proportion to the amount of MBS used.

Polymeric acrylic impact modifiers are the preferred polymeric impact modifier and it was observed that reduced smoke density was achieved using acrylic impact modifier(s). The acrylic impact modifiers comprise generally a low Tg (< 0°C) polymer principally derived from crosslinked or uncrosslinked acrylic rubber and a higher Tg polymer grafted or sequentially polymerized, typically comprising methacrylic acid ester monomer or mixtures of hardening monomers known in the art. Commercially available versions of acrylic impact modifiers are Durastrength® 200 from Atochem North America, Inc., and Paraloid® KM-330 or KM-334 from Rohm and Haas, Inc. Acrylic impact modifier is generally present at from 1 to 50 phr, preferably from 5 to 25 phr, more preferably at a level ranging from 10 to 22 phr, and most preferably from 14 to 19 phr

Chlorinated (CPE) is a rubbery material resulting from the chlorination of polyethylene having a substantially linear structure, a density (ASTM-D1505-57T) of from about 0.91 to about 0.98 gram/cc. at 23 °C., a melting point usually in the range of from about 100°C to 130°C., and melt index (according to ASTM-D1238-57T) in the range above about 0.05, more preferably in the range from about 0.05 to about 20. A method of preparing such a CPE material is more fully described in U.S. Patent 3,299,182. Suitable embodiments are commercially available from Dow Chemical, Inc. and E.I. Dupont de Nemours, Inc.. CPE materials generally contain from about 5% to about 50% by wt. of combined chlorine. Those containing from about 25% to about 40% wt. of combined chlorine are preferred, and those containing from about 32% to about 38% chlorine are most preferred. CPE was observed to have undesirable effects on increasing the smoke density and therefore is preferably absent or, if used, the amount of CPE should not exceed about 10 phr.

The lubricant system used in the present invention comprises preferably an alkyl ester of a long chain carboxylic acid (ester wax), a chemically modified paraffin wax, and an alkyl ester of an alkyl polyol (polyol ester). The term "alkyl" used herein includes straight chain or branched $C_1$ to $C_{50}$ alkyl substituents having any degree of unsaturation, as well as saturated alkyl substituents. The polyol esters include glycol esters and glycerol esters like ethylene glycol esters and propylene glycol esters. Polyol esters include oligomeric glycol esters or oligoglycerol esters. Partial esters of the polyol are included. Preferred polyol esters contain $C_8$ to $C_{30}$ carboxylic acids in the ester portion, and preferably $C_{12}$ to $C_{20}$ carboxylic acids in the ester portion, for example, a $C_8$ ester like diethylene glycol dicaprylate, a mixed $C_8$-$C_{10}$ ester like triethylene glycol dicaprylate-caprate, a $C_{18}$ ester of ethylene glycol such as ethylene glycol distearate, partial esters of polyols such as glycerol mono 2-ethylhexanoate and glycerol monostearate. Oligomeric polyol esters include esters of polyglycerol wherein there are preferably 2 to about 25 repeating polyol units, for example, diglycerol monooleate, hexaglycerol monostearate, hexaglycerol distearate, diglycerol monostearate, triglycerol monostearate, hexaglycerol distearate, or any of the glycerol, diglycerol, triglycerol or polyglycerol partial esters of oleic acid. More preferred are the esters derived from the reaction of a polyol and a $C_{12}$ to $C_{18}$ carboxylic acid, with most preferred versions being mono-$C_{16}$ to $C_{18}$ carboxylic acid ester of glycerol like glycerol monostearate. Glycerol esters are commercially available from Henkel, Inc..

The ester waxes referred to herein are other than those derived from a polyol, and include alkyl esters of substituted or unsubstituted $C_8$-$C_{30}$ carboxylic acids like the esters of mono-carboxylic acids including

caprylic acid, pelargonic acid, capric, undecylic acid, lauric acid, myristic acid, palmitic acid, margaric acid, stearic acid, oleic acid, ricinoleic acid, behenic acid, chlorocaproic acid, hydroxy capric acid and the like. Preferred are alkyl esters of $C_{16}$-$C_{18}$ carboxylic acids like esters of stearic acid, or mixed $C_6$ to $C_{25}$ acid esters.

The chemically modified synthetic waxes include oxidized microcrystalline wax, oxidized polyolefin, and oxidized polymethylene, including mixtures thereof, with oxidized polyethylene (OPE) being preferred. The chemical modification can be carried out by treating paraffin wax with air, ozone, oxidizing acids, peroxides, dichromate, hypohalite, permanganate, and peroxy acids. Generally the molecular weight of the wax before chemical modification ranges preferably from about 1500 to about 20,000. Oxidized polyethylene is commercially available from Allied-Signal, Inc..

A preferred lubricant system further comprises from about 0.1 to about 10 phr of a substituted or unsubstituted $C_8$ to $C_{30}$ carboxylic acid, for example the carboxylic acids enumerated above, such as undecylic acid, lauric acid, myristic acid, palmitic acid, margaric acid, stearic acid, oleic acid, ricinoleic acid, behenic acid, chlorocaproic acid, hydroxy capric acid, and 12-hydroxy stearic acid (HSA). If used, the $C_8$ to $C_{30}$ carboxylic acid is preferably present at from 0.1 to 2 phr, more preferably at from 0.2 to 1 phr and most preferably at from 0.25 to 0.75 phr.

Other optional lubricating components may be included in the lubricant system, such as hydrocarbon waxes, like paraffin wax and low molecular weight polyethylene; paraffin oils, like mineral oil; fatty alcohols such as cetyl, stearyl, or octadecyl alcohol; and amides of organic acids such as stearamide, ethylene-bis-stearamide and the like. Optional lubricants include the above listed long chain carboxylic acids, mineral oil, and paraffin wax. Metal soaps such as calcium stearate can be used. If used, metal soaps are preferably present at about from 0.1 to about 2.0 phr.

The amount of lubricants used generally ranges from:

| Component | Phr |
|---|---|
| polyol ester | 0.1 - 10 |
| chemically modified paraffin wax | 0.1 - 5 |
| ester wax | 0.1 - 5 |

The preferred range is:

| Component | Phr |
|---|---|
| polyol ester | 0.5 - 5 |
| chemically modified paraffin wax | 0.1 - 2 |
| ester wax | 0.2 - 3 |

A more preferred range is:

| Component | Phr |
|---|---|
| polyol ester | 0.8 - 3 |
| chemically modified paraffin wax | 0.2 - 1 |
| ester wax | 0.5 - 2 |

The most preferred range of amounts in the lubricant system of this invention is:

| Component | Phr |
|---|---|
| Polyol ester | 1.2 - 2.8 |
| Chemically modified paraffin wax | 0.25 - 0.75 |
| ester wax | 0.7 - 1.5 |

As mentioned above, there may be additional small amounts of lubricant added. A preferable added lubricant is a $C_8$ - $C_{30}$ carboxylic acid, including halogenated or hydroxyl derivatives thereof. If added, the

carboxylic acid if preferred at from 0.1 to about 2 phr, and more preferably from 0.3 to about 1.5 phr. Most preferred carboxylic acids are the $C_{16}$ to $C_{18}$ carboxylic acids. A hydrocarbon wax, preferably a paraffin wax can be included at from 0.1 to about 2 phr, more preferably 0.2 to about 1 phr and most preferably at from 0.25 to about 0.75 phr.

There is a preferred total amount of lubricant beyond which there are undesirable effects on HDT, impact strength and smoke density. Desirably the lubricant system comprises a total of about 1 to 15 phr of lubricants components, preferably from 2 to about 10 phr total, more preferably from 2.5 phr up to about 8 phr, and most preferably from 3 to 7.5 phr. The amount of lubricants desired depends somewhat on the I.V. of the matrix PVC resin used. By matrix, it is meant the continuous, predominant thermoplastic phase component. Generally, an amount within the lower end of the specified range of lubricants is suggested when the PVC resin used as the matrix has an I.V. less than about 0.6, whereas, when employing a matrix PVC of I.V. 0.8 or higher, relatively higher amounts within the specified range of lubricating ingredients are suggested. Several combinations are suggested herein within preferred ranges. Optimization of particular individual formulations is beyond the scope of the present invention.

The compounds comprise a dispersed particulate smoke suppressant system selected from compounds containing elements of the group consisting of molybdenum, iron, copper, zinc, vanadium, lithium, sodium, potassium, magnesium, calcium, barium, zirconium, manganese, antimony, phosphorous, aluminum, chromium, boron, tin and titanium including mixtures. Specific examples of smoke suppressants include CuS, $Cu_2S$, $Cu_3N$, $SnS_2$, $MoB_2$, FeS, $Cr_2S_3$, TiB, $AlB_{12}$, $Mg(OH)_2$, $2ZnO \bullet 3B_2O_3 \bullet 3.5\ H_2O$, zinc borate, $Al_2O_3 \bullet 3H_2O$, $Sb_2O_3$, including mixtures. The preferred smoke suppressant system contains a compound selected from the group consisting of molybdenum, copper, zinc, aluminum, boron, phosphorous, calcium or mixtures. Most preferred is a combination of molybdenum and copper, in particular, a preferred combination of a molybdate and a copper carboxylate. Additional types of smoke suppressants are not needed but may include molybdic compounds such as molybdic oxide.

The molybdenum compound is present preferably in an effective amount ranging from about 0.1 phr to about 8 phr, and more preferably from about 1 to about 4 phr. The molybdenum compound is introduced in the form of a finely-particulate powder, wherein each particle may consist of the molybdenum compound, or in an extended form in which the molybdenum compound is present in the form of a coating on the surfaces of carrier particles, as examples: hydrated alumina, barium sulfate, calcium sulfates like gypsum, terra alba, and plaster of paris, calcium carbonate, magnesium carbonate, zinc carbonate, silicas including magnesium carbonate, zinc carbonate, silicas including quartz and diatomaceous earth, talc, soapstone, kaolin clay, mica, pumice,and the like. Calcium carbonate, hydrated alumina, silica and talc are preferred extender particles. A carrier particle, if employed is preferably one with high surface area or porosity. The deposition of a molybdenum compound is a straight forward process and beyond the scope of the present disclosure. Reference is made to the techniques taught in U.S. Patents 3,726,694 and 3,874,883. Molybdenum compounds suitable for this purpose include molybdenum dioxide ($MoO_2$), molybdenum trioxide ($MoO_3$), as well as metal molybdate salts including ammonium dimolybdate, or ADM, $[(NH_4)_2MoO_7]$; ammonium heptamolybdate, or AHM, $[(NH_4)_6MoO_7O_{24} \bullet 4H_2O]$; ammonium octamolybdate, or AOM, $[(NH_4)_4Mo_8O_{26}]$; ammonium decamolyhdate, $[(NH_4)_2Mo_{10}O_{31}]$; sodium molybdate, $[Na_2MoO_4]$; calcium molybdate, $[CaMoO_4]$; zinc molybdate, $[ZnMoO_4]$; and the like.

Organo-molybdenum compounds are preferred molybdenum compounds and include organo-amine molybdates. Embodiments of organo-amine molybdate can be prepared for example by the treatment of an organo-amine with $MoO_3$, molybdic acid or a molybdenum salt such as ammonium molybdate, ammonium dimolybdate, ammonium heptamolybdate (also known as ammonium paramolybdate), ammonium octamolybdate, sodium molybdate, ammonium dimolybdate, ammonium heptamolybdate, sodium molybdate, and the commercial "molybdic acid" which primarily consists of one or more ammonium molybdates. The preparation of organo-amine molybdates is described in U.S. Pat. No. 4,053,451 which is incorporated herein by reference.

Organo-amine molybdates represent a more preferred class of molybdenum compounds. Organic amines suitable for preparing the organo-amine molybdates may contain from 1 to 40 carbon atoms and from 1 to 10 primary, secondary or tertiary amine groups or a mixture thereof; more preferably from 1 to 20 carbon atoms and 1 to 4 primary amines or heterocyclic secondary wine groups. Examples of organo-wines include aliphatic, alicyclic, aromatic and heterocyclic wines. Aliphatic wines include ethylamine, ethylenediame, 1,2-propanodiamine, 1,7-heptanediamine, 1,8-octanediamine, 1,10-decanediamine, 1,12-dodecanediamine and the like. Also included are aliphatic polyamines such as diethylenetriamine, triethylenetetramine, bis(hexamethylene) triamine, 3,3'-iminobispropylamine, quanidine carbonate, and the like. Other suitable amines include alicyclic diamines and polyamines such as 1,2-diaminocyclohexane, 2',4-diamino-1-propyl-4-methylcyclohexane, and the like; aromatic amines as aniline, N,N-dimethylaniline, and

naphthylamine; and heterocyclic amines such as melamine, pyridine, piperazine; hexamethylenetetramine; 2,2,3-trimethyl decahydroquinoline, 2,4,6-tri(-morpholino)-1,3,5-triazine; and N-(aminoalkyl)-piperazines wherein each alkyl group contains from 1 to 12 carbon atoms, more preferably 1 to 6 carbon atoms, such as N-(2-aminoethyl)piperazine, and the like. Examples of suitable polymeric amines include polyethyleneimine, polyvinylpyridine, polyvinyl pyrrolidine, and poly(2,2,4-trimethyl-1,2-dihydroquinolyl). Excellent results are obtained using melamine, piperazine, and alkyl amines wherein the alkyl contains 1 to 8 carbon atoms.

Useful melamine and substituted melamines have the formula:

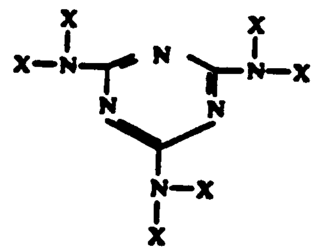

wherein X is hydrogen or an alkyl, alicyclic, aralkyl, alkaryl, aryl or heterocyclic group containing from 1 to 10 atoms of C,O,S and/or N. Two X's on each of one or more nitrogen atoms may also be joined together to form a heterocyclic ring such as a morpholino group in 2,4,6-tri(morpholino)-1,3,5-triazine. Other examples of suitable substituted melamines include N,N',N''-hexaethylmelamine; 2-anilino-4-(2',4'-dimethylanilino)-6-piperidino-1,3,5-triazine; and 2,4,6-tri(N-methylanilino)-1,3,5-triazine. The organo-amine molybdate normally contains from about 1 to 2 moles of molybdenum per mole of amine.

Melamine molybdate is a more preferred organo-amine type. Melamine molybdate can be prepared in aqueous formic acid as follows: 10 grams of melamine, 7.30 grams of formic acid, and 250 ml water are dissolved together by refluxing in a 500 ml. round-bottomed flask equipped with a stirrer and water-cooled condenser; 26.95 grams of ammonium dimolybdate are dissolved in 50 ml. hot water and then added to the first solution. A white precipitate forms immediately. The reaction mixture is refluxed for 1 hour, cooled to room temperature (about 25°C.), and filtered through Whatman No. 42 filter paper that is backed by a Macherey, Negel and Company (Duren, Germany) MN-85 filter paper supported on a Buchner funnel. A white solid is recovered and washed three times with water. The solid is vacuum dried for 3 hours at 120°C.

The organo-amine molybdates used in this invention may be in the form of polycrystalline or amorphous fine powders. Molybdates useful herein generally will have a median diameter of less than 25 $\mu$, preferably less than 5 $\mu$, more preferably less than 3 $\mu$, and most preferably less than 2.6 $\mu$. It is not sufficient to describe the median particle size for particulate molybdenum compounds, as particular attention should be paid to the outsized particles. It was found that without modification of the powdered molybdenum compound such as by pretreatment with a jet milling device, inconsistent physical properties were obtained. By milling and reducing the fraction of outsized particles, commercial compounding of large quantities having significantly more consistent impact strength was achieved. The overall mean diameter does not distinguish the fraction having out-size diameter. Two molybdates may have similar apparent mean diameter, however there is no way of characterizing the fraction of outsized partcles. The molybdates therefore will desirably have a number fraction greater than or equal to 10 $\mu$ of less than 7 %, preferably less than 5 %, more preferably less than 3%.

In the preferred embodiments utilizing molybdates and copper carboxylate, these components are present in a range of weight ratio, respectively, of 1:10 to 10:1, preferably from 5:1 to 1:5. A more preferred range for the ratio of molybdate to copper carboxylate is from 5:1 to 1:1, and a most preferred ratio is from 4:1 to 2:1. Commercial molybdate compound is available from Sherwin Williams under the Chemguard® mark. Ammonium octamolybdate is available from Amax, Inc.

Copper carboxylate desirably has a median diameter less than 10 micron ($\mu$) preferably less than 5 $\mu$, more preferably less than 3 $\mu$, and most preferably less than 2 $\mu$. The copper carboxylate also desirably has a number fraction greater than or equal to 10 $\mu$ of less than 30%, preferably less than 25%, more preferably less than 10% and most preferably less than 5%.

The compounds of the invention are rigid in the fused state and have a limitation on HDT. A small amount of at least one optional plasticizer may be included. Depending on plasticization efficiency, a minor amount ranging from 0 to about 10 phr, preferably from 0 to 5 phr, and most preferably no plasticizer is

used. If used, the upper limit is controlled by not allowing HDT at 66 psi to drop below about 58 °C and for smoke density (Dm) to rise to an unacceptable level above about 500 either in the flaming or non-flaming mode.

Specific examples of plasticizers include esters of carboxylic acids including the various esters of adipic acid, azelaic acid, phthalic acid, benzoic acid, and citric acid, isobutyric acid, isophthalic acid, sebacic acid, isosebacic acid, stearic acid, tartaric acid, oleic acid, succinic acid, phosphoric acid, terephthalic acid, pentaerythritol, trimellitic acid, and mixtures. Other plasticizers include for example, partial esters of the above carboxylic acids, ethers, glycol derivatives, glycolates, glycerol derivatives. These are set forth in The Technology of Plasticizers, by Sears and Darby, pages 893-1085, John Wiley & Sons, New York, 1982. Preferred plasticizers are non-aromatic. Those which include $C_4$ and higher alkyl diesters of phthalic acid, such as di-2-ethylhexyl phthalate, di-isodecyl phthalate (DIDP) and bisphthalates, $C_8$ and higher alkyl triesters of trimellitic acid, for example, tri-octyltrimellitate (TOTM) are preferably avoided or used at very low levels less than 5 phr, more preferably less than 2 phr. Various polymeric plasticizers can also be utilized such as the polyesters, polyepichlorohydrins, polyacrylates, ethylene copolymers, and copolymers prepared from di- and monoolefins. Commercial polyester plasticizers include for example, DRAPEX® 409 and 429 from Witco Chemical, PLASTOLEIN® 9789 from Emery Industries; pentaerythritol ester derivatives such as HERCOFLEX® 707 (Hercules Inc.);

The flame retardant plasticizers that may be utilized in the present invention include, for example, brominated aromatic phthalate such as, for example, PYRONIL® 45 available from Pennwalt and Great Lakes FR-45B (tetrabromophthalic acid bis (2-ethylhexylester); phosphate plasticizers such as, for example, triaryl phosphates sold under the trademarks SANTICIZER® 154 from Monsanto, KRONITEX® 100 from FMC and PHOSFLEX® 41P from Stauffer, and diaryl phosphates such as SANTICIZER 148 (isodecyldiphenyl phosphate) from Monsanto. The type and amount of plasticizer utilized will depend upon the desired physical characteristics of the composition. The limitation on the amount of plasticizer loading ranges is based primarily on not allowing heat distortion temperature to drop below about 58 °C on unannealed samples under a 66 psi load. Therefore, owing to the varied effects of different plasticizers on HDT, as little as 1-2 phr only may be tolerable for one type with high plasticizing efficiency such as DOP, while a higher amount of a less efficient type such as a polymeric plasticizer may be tolerated.

The PVC compounds used herein will typically contain other additives selected from the group consisting of: pigments, blowing agents, coupling agents, processing aids, fillers, antistatic agents, anti-fogging agents, and colorants all of which are commercially available. Reference is made to Modern Plastics Encyclopedia 1988 published by McGraw Hill Co or The Chemical Week Buyers' Guide 1990 , published by Chemical Week Associates.

Exemplary antistats are commercially available under the Glycolube® trademark of Lonza Corp. An exemplary antifogging agent includes the alkyl phenol ethoxylates as for example those commercially available under the Surfonic trademark of Texaco, Inc.

Adjustment of melt viscosity can be achieved as well as increasing melt strength by employing polymeric processing aids. The preferred processing aids are lubricating process aids. Exemplary processing aids are copolymers of methylmethacrylate and acrylates such as poly(methylmethacrylate-co-ethyl acrylate). Preferred commercial versions from Rohm and Haas, Inc. include but are not limited to Paraloid® K-120ND, and K-120N. It was found that a lubricating process aid was beneficial to achieving the best balance of properties. A lubricating processing aid is a polyacrylate copolymer comprising preferably methylmethacrylate and another methacrylate or acrylate containing from 1 to 20 carbon atoms in the ester group. A commercial version such as Rohm and Haas, Inc. designation K-175 is suitable. Reference to processing aids is in The Plastics and Rubber Institute; International Conference on PVC Processing, April 26-28 (1983), Paper No. 17. The amounts of processing aids useful herein generally range from 0.1 to 15 phr, preferably 0.5 to 12 phr, more preferably from 1 to 5 phr and most preferably from 2 to 3.5 phr. Preferred are lubricating types.

Exemplary fillers are optional and include clay, barytes, calcium carbonate, dolomite, talc, mica, aluminum trihydrate, silica, silicates and fibrous reinforcing fillers such as glass fiber, carbon fiber, graphite fiber, etc. Preferred are calcium carbonate, talc, mica, dolomite, silica, silicates, glass fiber, and clay. More preferred are calcium carbonate, talc and clay, with calcium carbonate most preferred. Amounts used range generally from 1-1000 phr, preferably 1-100 phr, more preferably 1-20 phr and most preferably 3-8 phr. The amount of filler is limited by considering the loss in impact strength and effect on viscosity, melt flow rate and DTS. It was found that the best balance of properties were achieved when filler was used from 1 to about 10 phr. In particular where $CaCO_3$ was used, the best combination of properties was found using from 2 to 8 phr.

There may be one or more pigments included, for example inorganic pigments like metallic oxides. Metallic oxides commonly used are oxides of titanium, antimony, lead, silicon, iron and chromium. There are the elemental pigments like carbon black, the metallic pigments such as copper alloys, aluminum and aluminum bronze. There are the metallic salts as colored pigments, such as iron blues, chrome greens, chrome yellow, cadmium sulfide, lithopone, mercury-cadmium pigments, ultramarine blue, manganese violet. The organic pigments include basic colorants, azo pigments,soluble azos, and condensed acid pigments are mentioned among the many other types widely available. Preferred pigments, when used, are carbon black and titanium dioxide ($TiO_2$) which are commercially available. Useful $TiO_2$ types are coated or uncoated rutile titanium dioxide powder. One commercial grade is Ti-Pure® R-100 from E.I. DuPont De Nemours and Co. Inc. The amount of pigment used generally will range from 0-50 phr, more preferably 0.1 to 20 phr.

The modified low smoke PVC compounds of the present invention exhibit in the fused state, an improved combination of impact strength, DTS and HDT in the presence of smoke suppressant. These performance levels achieved are a room temperature notched IZOD of above about 2 ft.-lbs/in. (of notch) and in some embodiments above about 3 ft.-lbs./in., and in others above about 10 ft.-lb./in notch. Brabender dynamic thermal stability time at 400 °F and 50 rpm with a No. 5 mixing head of at least 15 minutes was achieved, in some embodiments at least 18 minutes and in other embodiments at least 20 or 22 minutes DTS was achieved and still offerd a superior combination of physical properties. Compounds of the invention achieved an unannealed HDT at 66 psi of greater than about 58 °C, in some embodiments at least 60 °C, and in other embodiments at least 64 °C and in still other embodiments 66 °C and higher.

In preparing compounds, an admixed dry powder blend is made and preferably prepared in a high intensity mixer such as a Henschel® mixer. Melt compounding in the fused state is done in a fluxing mixer such as a Banbury mixer or a continuous fluxing type mixer such as, for example, a Farrell Continuous Mixer (FCM), Buss kneading-type extrusion compounder or planetary gear extruder in a temperature range of 330 to 400 °F and below the decomposition temperature of any ingredients. The composition can be extruded and cut into pellets or cubed. The compound can also be milled and removed as a strip of material, cooled and diced into pellets or cubes. The preferred process to manufacture is by the use of a mill, a Banbury mill or a compounding extruder with the more preferred being a compounding extruder. Surprisingly the use of a kneading type compounding extruder with a segmented screw such as a Buss® compounding extruder resulted in lower smoke density, and higher impact resistance when compared side-by-side to compounds prepared by commercial milling. The work level in melt processing of the compounds should be relatively high to develop the best combination of properties.

The compounds of the present invention can be utilized in a melt forming process to form an article, such as, for example, injection molding, extrusion, thermoforming, compression molding, calendering, and the like. Examples of a specific applications include shower stalls, wall panels, tub enclosures, refrigerator panels, appliance housings, electrical housings, sporting equipment, plumbing ware, automotive components, and business machine components and housings. Thus, the use of the present invention has extended the range of applications for PVC-based compounds.

## EXAMPLES

The invention will be better appreciated by the following examples in which comparisons are made between examples not a subject of this invention with those which exemplify the improvements of this invention. All amounts of ingredients are shown in weight parts. The following ASTM test procedures were used in evaluating the performance parameters measured.

| Property | Test |
|---|---|
| Smoke Density | ASTM-E662 |
| IZOD Impact Strength | ASTM-D256 |
| Heat Distortion Temp.* | ASTM-D648 |
| Inherent Viscosity | ASTM-D1243 |
| Dynamic Thermal Stability | Brabender Plasticorder® |

* At 66 psi on unannealed compression molded samples

The DTS test measures the time-torque relationship at selected temperatures using an instrument such as the Brabender Plasticorder®. Model PL-V30Z is a suitable model. The test value reported was obtained

at 50 rpm and used for comparing the "DTS time". DTS time is defined as the total time elapsed from the start of turning of the rotors, including the time to fall to the minimum torque value, and including the time up to the point where torque starts to rise noticeably at about 50-100 meter-grams from the minimum torque. DTS time is dependent not only on inherent polymer stability, but also on temperature, sample size, compound formulation, instrument operating conditions, degree of instrument maintenance, and other conditions. DTS was run using a no. 5 mixing head, with a bowl temperature of 400° F, such conditions controlled to provide for accurate comparisons. The preferred compounds of this invention have a DTS time of at least 18 minutes, more preferable embodiments have 20 minutes or higher DTS, and most preferred embodiments achieve at least 22 minutes DTS time. A difference in DTS time of 2 or more minutes is considered a significant difference within the type of compounds of the present invention.

Specific Smoke Density in both the flaming ($D_m$) and non-flaming ($D_m$) modes was measured by means of the National Bureau of Standards (NBS) smoke chamber designed to meet ASTM E662 test requirements. The maximum optical density (as a function of light obscuration) for each sample was observed using a vertical light path was measured. Smoke density was measured in the flaming and non-flaming modes. Some embodiments of the inventionn achieved, in either the flaming on non-flaming modes, a smoke density ($D_M$) of less than 500, in other embodiments, less than 475, in more preferred embodiments less than 450, and in most preferred embodiment less than 400, for 0.125 inch nominal thickness test samples.

VARIABLE HEIGHT IMPACT STRENGTH

The Variable Height Impact Test pertains to impact strength of an article wherein a conical dart (generally with 1/8" dia. tip) is placed in a graduated cylindrical tube, and the article is placed below the cylinder. To the dart is attached a weight and the dart is dropped, while contained by the cylinder, onto the sample plaque. The height of the weight is increased until the dart puncture area shows a failure (typically when a crack appears in the impacted area and light can be clearly seen through the crack). The height of the weight is then lowered incrementally until the impacted points pass the test (when no crack through which light can be seen is made). The height is then increased again until a failure occurs and then decreased until a pass occurs. Typically 9 to 16 impacts are made per test. The height (of the dart above the sample) at which 50% of the time a pass occurs is taken as the value to be used to calculate the average impact strength. This value is the weight times the height and is usually reported in inch-pounds. The inch-pounds may be divided by the average thickness of the sample (here approximately 20 mils.; a mil = 0.001 inch) and the final value is reported as inch-pounds per mil. The VHIT performance achieved by the invention is at least 0.2 in. - lbs./mil, in some embodiments at least 0.4 in. -lbs./mil was achieved and in the most preferred embodiments at least 0.5 in. -lbs./mil. was achieved. Where indicated, VHIT was tested using a specified procedure.

CAPILLARY VISCOSITY

An instron capiillary viscscometer is used opening and tests with a 0.05" nominal run at 205° C at the sear rates indicates in the tables below.

Smoke Density Determination

The preparation procedures outlined in NFPA-258 were followed for testing smoke density using an NBS smoke chamber. ASTM E-662 is incorporated in part in MFPA-258.

**EXAMPLES**

The following examples were prepared by mixing all components to form a powder mixture either by hand or with a Henschel mixer (as indicated). The powder mixture was banded on a heated 2-roll mill for several minutes. The band fluxed sufficiently for a uniform sheet of approximately 0.075 in. thickness to be formed which was then cut and removed. Samples were die cut either to 6 in. x 6 in. or 4 in. by 8 1/2 in. Two layers of the sheet were placed together and compression molded in a heated press to a thickness of 0.125 inch. depending on the test used for each sample. Test procedures followed the aforementioned standard procedures. All parts used were weight parts. Where indicated, the sample test preparation was varied and an extrusion - type compounding device was used.

TABLE I-A

| Components* | Weight Parts | | | | |
|---|---|---|---|---|---|
| * hand mixed | 1 | 3 | 4 | 5 | 7 |
| PVC (IV .68) | 100 | 100 | 90 | 100 | 80 |
| PVC (IV .92) | - | - | - | - | 20 |
| Acrylic I.M.[1] | 12 | 12 | 12 | 20 | 20 |
| Acrylic I.M.[2] | - | - | - | - | - |
| CPE | - | - | - | - | - |
| AMS terpolymer[3] | - | - | 10 | - | - |
| Proc. Aid[4] | 1 | 2 | 2 | 2 | 2 |
| Proc. Aid[5] | 1 | 1 | 1 | 1 | 1 |
| Mel. Molybdate[6] | 2.5 | 2.5 | 2.5 | 2.5 | 2.5 |
| Cu. Oxalate[7] | 1.1 | 1.1 | 1.1 | 1.1 | 1.1 |
| DOP[8] | 2 | - | - | - | - |
| Ester Wax | 1 | 1 | 1 | 1 | 1 |
| Polyol Ester[9] | 1 | 1 | 1 | 1 | 1 |
| HSA[10] | 0.4 | 0.4 | 0.4 | 0.4 | 0.4 |
| OPE[11] | 0.2 | 0.2 | 0.2 | 0.2 | 0.2 |
| $CaCO_3$ | 5 | 5 | 5 | 5 | 5 |
| Tin Stabilizer[12] | 3 | 3 | 3 | 3 | 3 |
| ESO[13] | 4.5 | 1 | 1 | 1 | 1 |
| $TiO_2$ | - | 2 | 2 | 2 | 2 |

[1] Paraloid® KM-334 (IM1)
[2] Paraloid® KM-330 (IM2)
[3] Blendex® 586 ex. G.E. Inc.
[4] Paraloid® K-120-N (PA1)
[5] Paraloid® K-175 (PA2)
[6] un-milled melamine molybdate - 7.4% > 10 $\mu$ ; mean dia. = 2.1 $\mu$
[7] copper oxalate
[8] dioctyl phthalate
[9] glycerol monostearate
[10] hydroxy stearic acid
[11] Oxidized polyethylene
[12] dimethyl tin diisooctylthioglycolate
[13] epoxidized soy oil

TABLE I-B

| Test | Results | | | | |
|---|---|---|---|---|---|
| | 1 | 3 | 4 | 5 | 7 |
| $D_M$ Flaming | 394 | 327 | 344 | 395 | 318 |
| $D_M$ Non-Flaming | 273 | 220 | 243 | 321 | 288 |
| Izod 23°C ft-lb/in. | 4.5 | 3.7 | 3.1 | 8.1 | 11.9 |
| Izod (-20°C) ft-lb/in. | 2.6 | 2.0 | 1.4 | 1.4 | 4.0 |
| DTS Chart (min.) | 33 | 23 | 22 | 21 | 20 |
| Visc. (x $10^3$ poise)[1] | 12.1 | 16.4 | 14.6 | 15.3 | 18.5 |
| Torque (m-g) | 1200 | 1400 | 1450 | 1500 | 1700 |
| Tens. strength (psi) | 5900 | 6200 | 6150 | 5400 | 5400 |
| Tens. mod.(x $10^3$ psi) | 389 | 332 | 350 | 289 | 313 |
| HDT (°C) | 56 | 66 | 69 | 69 | 68 |
| VHIT in.-lb[2] | 260 | 264 | 260 | 263 | 264 |

[1] Brabender equilibrium viscosity after fusion
[2] using a hemispherical 5/8 inch (1.69 cm.) dia. tup on 1/8 in. (0.3 cm) thick samples (not divided by thickness)

Table I-B illustrates the results of testing of compounds in table I-A. It is shown the presence of an aromatic plasticizer reduces the heat distortion temperature which is undesirable, lowers viscosity and improves DTS, however, higher smoke density is obtained which is also undesirable. Impact strength is improved by the use of small amounts of plasticizer. Examples I-5 and I-15 are compared to Example I-3 for showing the undesirable increase in smoke density when including a higher amount of acrylic impact modifier, however impact strength improves, while DTS is somewhat reduced. Example I-7 illustrates a combination of acrylic impact modifier and a minor amount of PVC having an I.V. higher than the I.V. of the principal PVC polymer as the continuous phase. Impact strength was improved versus Example I-6 with only 20 parts acrylic. Note that in the presence of the same amount of acrylic impact modifier in I-7 and I-6, the presence of 20 weight parts of the higher I.V. PVC resulted in a significant reduction in smoke density both in the flaming and non-flaming mode. In example I-4, it is shown that the addition of a small amount of AMS terpolymer increased smoke density while increasing HDT and slightly decreasing impact strength.

| TABLE II-A | | | | | | | | | | |
|---|---|---|---|---|---|---|---|---|---|---|
| Components* | Wt. Parts | | | | | | | | | |
| * Henschel mixed | 12 | 1 | 3 | 4 | 5 | 6 | 7 | 8 | 9 | 13 |
| PVC (IV .68) | 80 | 100 | 100 | 85 | 80 | 80 | 80 | 80 | 80 | 80 |
| PVC (IV .92) | 20 | - | - | - | 20 | - | - | - | - | - |
| IM1 | 20 | 12 | 20 | 12 | 20 | 20 | 20 | 20 | - | 20 |
| IM2 | - | - | - | 15 | - | - | - | - | - | - |
| CPE | - | - | - | - | - | - | 20 | - | 20 | - |
| PA1 | 2 | 2 | 2 | 2 | 2 | 2 | 2 | 2 | 2 | 2 |
| PA2 | 1 | 1 | 1 | 1 | 1 | 1 | 1 | 1 | 1 | 1 |
| Mel. Molybdate | - | 2.5 | 2.5 | 2.5 | 2.5 | 2.5 | 2.5 | 2.5 | 2.5 | 4 |
| Cu Oxalate | - | 1.1 | 1.1 | 1.1 | 1.1 | 1.1 | 1.1 | 1.1 | 1.1 | 1.1 |
| Ester Wax | 1 | 1 | 1 | 1 | 1 | 1 | 1.2 | 1 | 1 | 1 |
| Polyol ester | 1 | 1 | 1 | 1 | 1 | 1 | 1.2 | 1 | 1 | 1 |
| HSA | 0.4 | 0.4 | 0.4 | 0.4 | 0.4 | 0.4 | 0.4 | 0.4 | 0.4 | 0.4 |
| OPE | 0.2 | 0.2 | 0.2 | 0.2 | 0.2 | 0.2 | 0.2 | 0.2 | 0.2 | 0.2 |
| $CaCO_3$ | 5 | 5 | 5 | 5 | 5 | 5 | 25 | 5 | 5 | 5 |
| Tin 1 | 3 | 3 | 3 | 3 | 3 | 3 | 3 | 3 | 3 | 3 |
| ESO | 1 | 1 | 1 | 1 | 1 | 1 | 1 | 1 | 1 | 1 |
| $TiO_2$ | 2 | 2 | 2 | 2 | 2 | 2 | 2 | 2 | 2 | 2 |

| TABLE II-B | | | | | | | | | | |
|---|---|---|---|---|---|---|---|---|---|---|
| Test | Results | | | | | | | | | |
| | 12 | 1 | 3 | 4 | 5 | 6 | 7 | 8 | 9 | 13 |
| $D_M$ Flaming | 535 | 329 | 327 | 322 | 283 | 347 | 408 | 302 | 403 | 535 |
| $D_M$ Non-Flaming | 423 | 280 | 307 | 348 | 305 | 361 | 406 | 341 | 306 | 423 |
| Izod 23°C ft-lb/in. | 17.9 | 1.6 | 9.9 | 12.1 | 11.8 | 2.6 | 13.7 | 11.7 | 2.7 | 17.9 |
| Izod-20°C ft-lb/in. | 8.7 | 1.4 | 1.0 | 1.7 | 3.9 | 1.7 | 4.6 | 3.8 | 1.8 | 8.7 |
| DTS (min.) | 43 | 39 | 25 | 25 | 23 | 23 | 25 | 31 | 31 | 43 |
| Visc X $10^3$ Poise* | 14.6 | 10.8 | 14.1 | 15.8 | 17.3 | 19.4 | 12.6 | 14.6 | 9.2 | 14.6 |
| Torque (m-g) | 1450 | 1050 | 1400 | 1600 | 1550 | 1500 | 1250 | 1450 | 1000 | 1450 |
| Tens. strength (psi) | 5100 | 5800 | 5400 | 4600 | 5500 | 4850 | 3600 | 4850 | 4450 | 5100 |
| Modulus (X$10^3$ psi) | 360 | 381 | 320 | 281 | 336 | 361 | 235 | 300 | 310 | 360 |
| HDT (°C) | 68 | 58 | 70 | 70 | 72 | 69 | 70 | 72 | 67 | 68 |
| VHIT (in.-lb./mil) | 0.8 | - | 0.71 | 0.67 | 0.41 | 0.65 | 0.66 | 0.67 | 0.63 | 0.80 |

* At 205°C and 148 $Sec^{-1}$

In table IIB it is shown that the use of copper oxalate and melamine molybdate will drastically lower the smoke properties (compare II-5 with II-12) while hurting the impact strength and reducing the DTS time. The use of epoxide material (ESO) and plasticizer (DOP) and a reduced level of impact modifier improved DTS time but reduced the HDT significantly to (II-5 vs. II-2). Combining two impact modifiers and using a somewhat higher total level gave improved Izod impact strength while only marginally increasing the smoke generation (II-4 vs. II-3). A very high level of $CaCO_3$ surprisingly increased the smoke generation and, as expected, reduced the impact strength (II-6 vs. II-5), and (II-6 vs. II-8). The addition of 20 parts of CPE surprisingly increased the smoke generation while only marginally increasing the Izod impact strength and DTS vs. the use of high I.V. PVC (II-7 vs. II-5) or no extra additives (II-7 vs. II-8). The use of high I.V. PVC surprisingly lowered the smoke generation (II-5 vs. II-3) and gave significantly higher notched Izod impact strength. The use of CPE as a replacement for the acrylic impact modifier surprisingly, dramatically increased the smoke in the flaming mode and gave very poor Izod impact (II-9 vs. II-8). Increasing the level of unmilled melamine molybdate slightly reduced the smoke properties and Izod impact strength and significantly reduced the DTS time (II-13 vs. II-8).

TABLE III-A

| Component | Wt. Parts | | | | | | |
|---|---|---|---|---|---|---|---|
| | 15 | 16 | 17 | 18 | 19 | 20 | 21 |
| PVC (IV .68) | 80 | 80 | 80 | 80 | 80 | 70 | 80 |
| IM1 | 20 | 20 | 20 | 20 | 20 | 20 | 20 |
| PA1 | 2 | 2 | 2 | 2 | 2 | 2 | 2 |
| PA2 | 1 | 1 | 1 | 1 | 1 | 1 | 1 |
| Mel. Molybdate | 2.5 | 2.5 | 2.5 | 2.5 | | 2.5 | 2.5 |
| Cu Oxalate | 1.1 | 1.1 | 1.1 | 1.1 | 1.1 | 1.1 | 1.1 |
| $Al_2O_3 \cdot 3H_2O$ | - | - | - | - | - | 10 | - |
| $Sb_2O_3$ | 4 | - | - | - | - | - | 2 |
| $MgCO_3/CaCO_3$ | - | - | - | - | 20 | - | - |
| Molybdic Oxide | - | - | 2 | 4 | - | - | 2 |
| ZnO/MgO | - | 4 | - | - | - | - | - |
| Ester Wax | 1 | 1 | 1 | 1 | 1 | 1 | 1 |
| Polyol ester | 1 | 1 | 1 | 1 | 1 | 1 | 1 |
| HSA | 0.4 | 0.4 | 0.4 | 0.4 | 0.4 | 0.4 | 0.4 |
| OPE | 0.2 | 0.2 | 0.2 | 0.2 | 0.2 | 0.2 | 0.2 |
| $CaCO_3$ | 5 | 5 | 5 | 5 | 5 | 5 | 5 |
| Tin 1 | 3 | 3 | 3 | 3 | 3 | 3 | 3 |
| ESO | 1 | 1 | 1 | 1 | 1 | 1 | 1 |
| $TiO_2$ | 2 | 2 | 2 | 2 | 2 | 2 | 2 |

TABLE III-B

| Test | | | | | | | |
|---|---|---|---|---|---|---|---|
| | 15 | 16 | 17 | 18 | 19 | 20 | 21 |
| $D_M$ Flaming | 346 | 339 | 258 | 239 | 167 | 278 | 274 |
| $D_M$ Non-Flaming | 376 | 301 | 292 | 285 | 297 | 348 | 289 |
| Izod (23 ° C) ft.-lb/in. | 10.2 | 4.9 | 9.3 | 8 | 3.9 | 2.9 | 7.7 |
| Izod (-20 ° C) ft.-lb/in. | 2.1 | 1.8 | 2.8 | 2.4 | 1.2 | 0.7 | 2.3 |
| DTS Chart (min.) | 25 | 13 | 21 | 17 | 23 | 29 | 23 |
| VISC (x $10^3$ poise*) | 15.2 | 16.6 | 15.5 | 15.4 | 17.4 | 16.4 | 15.3 |
| Equil Torque (m-g) | 1500 | 1550 | 1500 | 1550 | 1500 | 1550 | 1500 |
| Tens. Strength (psi) | 5050 | 5050 | 5050 | 5100 | 4800 | 4550 | 5150 |
| Tens. Modulus (x $10^3$ psi) | 303 | 329 | 325 | 347 | 377 | 309 | 348 |
| HDT ( ° C) | 70 | 70 | 69 | 70 | 69 | 68 | 71 |
| VHIT (in.-lb./mil) | 0.61 | 0.61 | 0.59 | 0.65 | 0.38 | 0.59 | 0.65 |

* At 205 ° C and 148 $Sec.^{-1}$

In table III-B are the results of experiments using additional smoke suppressing additives. Comparing III-15 and III-16 to III-8, the $Sb_2O_3$ and ZnO had essentially no effect on smoke density. Molybdic oxide reduced the smoke density but also reduced Izod impact strength and Brabender DTS time (note III-17 and III-18 vs. II-8). The $MgCO_3/CaCo_3$ reduced the smoke significantly but also reduced Izod significantly (III-19 vs. II-8). Aluminum trihydrate had a varied effect on smoke reduction while significantly lowering Izod impact (III-20 vs. II-8). Molybdic oxide and $Sb_2O_3$ lowered smoke but also somewhat reduced Izod and significantly reduced DTS (III-21 vs. II-8).

TABLE IV-A

| Component | Wt. Parts | | | | | | | | | | | | | | |
|---|---|---|---|---|---|---|---|---|---|---|---|---|---|---|---|
| | 1 | 2 | 3 | 4 | 16 | 17 | 18 | 19 | 20 | 21 | 22 | 23 | 25 | 26 | 27 |
| PVC (IV .68) | 80 | 80 | 80 | 80 | 95 | 100 | 95 | 95 | 95 | 80 | 90 | 80 | 75 | 75 | 90 |
| PVC (IV .92) | 20 | - | - | - | 5 | - | 5 | 5 | 5 | 20 | 10 | - | 5 | 5 | 10 |
| IM1 | 20 | 20 | 20 | 20 | 25 | 27 | 25 | 20 | 20 | 10 | 20 | 20 | 20 | 20 | 20 |
| PA1 | 2 | 2 | 2 | 2 | 2 | 2 | 2 | 2 | 2 | - | - | 2 | 2 | 2 | - |
| PA2 | 1 | 1 | 1 | 1 | 1 | 1 | 1 | 1 | 1 | 3 | 3 | - | 1 | 1 | 3 |
| Mel. Molybdate | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Cu Oxalate | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |
| $Sb_2O_3$ | - | - | - | 2 | - | - | - | - | - | - | - | 2 | - | 1 | - |
| $MgCO_3/CaCO_3$ | - | - | 20 | - | - | - | - | 10 | 5 | - | - | - | - | - | - |
| Molybdic Oxide | - | - | - | 2 | 1 | - | 1 | - | - | - | - | 2 | 2 | 2 | 2 |
| Ester Wax | 1 | 1 | 1 | 1 | 1 | 1 | 1 | 1 | 1 | 2.5 | 2.5 | 1 | 1 | 1 | 2.5 |
| Polyol Ester | 1 | 1 | 1 | 1 | 1 | 1 | 1 | 1 | 1 | 2.5 | 2.5 | 1 | 1 | 1 | 2.5 |
| HSA | 0.4 | 0.4 | 0.4 | 0.4 | 0.4 | 0.4 | 0.4 | 0.4 | 0.4 | - | - | 0.4 | 0.4 | 0.4 | - |
| OPE | 0.2 | 0.2 | 0.2 | 0.2 | 0.2 | 0.2 | 0.2 | 0.2 | 0.2 | - | - | 0.2 | .2 | .2 | - |
| Stearic Acid | - | - | - | - | - | - | - | - | - | 1 | 1 | .5 | 2 | 2 | 2 |
| $CaCO_3$ | 5 | 5 | 5 | 5 | 5 | 5 | 5 | 5 | 5 | 5 | 5 | 5 | 5 | 5 | 5 |
| Tin 1 | 3 | 3 | 3 | 3 | 3 | 3 | 3 | 3 | 3 | 3 | 3 | 3 | 3 | 3 | 3 |
| ESO | 1 | 1 | 1 | 1 | 1 | 1 | 2 | 1 | 1 | 3 | 3 | 3 | 3 | 1 | 3 |
| $TiO_2$ | 2 | 2 | 2 | 2 | 2 | 2 | 2 | 2 | 2 | 2 | 2 | 2 | 2 | 2 | 2 |

TABLE IV-B

| Test | Results | | | | | | | | | | | | | | |
|---|---|---|---|---|---|---|---|---|---|---|---|---|---|---|---|
| | 1 | 2 | 3 | 4 | 16 | 17 | 18 | 19 | 20 | 21 | 22 | 23 | 25 | 26 | 27 |
| $D_M$ Flaming | 338 | 288 | 358 | 308 | 235 | 335 | 368 | 369 | 344 | 387 | 339 | 394 | 294 | 342 | 335 |
| $D_M$ Non-Flaming | 340 | 410 | 335 | 340 | 388 | 374 | 391 | 319 | 313 | 415 | 427 | 353 | 424 | 419 | 454 |
| Izod (23°C ft.lb/in.) | 7.8 | 9.5 | 1.9 | 9.8 | 12.0 | 12.4 | 9.7 | 4.4 | 7.6 | 3.7 | 6.3 | 5.9 | 8.0 | 5.6 | 12.3 |
| Izod (-20°C ft-lb/in) | 2.0 | 4.8 | 1.3 | 4.0 | 5.1 | 4.2 | 4.3 | 2.3 | 3.0 | 2.5 | 3.4 | 3.0 | 2.8 | 3.4 | - |
| DTS (min.) | 20 | 28 | 27 | 16 | 21 | 21 | 21 | 21 | 22 | 34 | 24 | 32 | 27 | 28 | 23 |
| Visc.(X $10^3$ Poise) | 17.7 | 14.5 | 16.9 | 24.5 | 16.8 | 16.2 | 15.7 | 16.1 | 16.2 | 9.3 | 12.8 | 14.5 | 13.9 | 15.4 | 13.0 |
| Torque (m-g) | 1200 | 1100 | 1100 | 1450 | 1200 | 1200 | 1150 | 1100 | 1100 | 850 | 1000 | 1000 | 1100 | 1200 | 1000 |
| Tens. str. (X$10^3$psi) | 5400 | 5000 | 4450 | 4850 | 4850 | 4600 | 4950 | 5350 | 5400 | 5750 | 4900 | 5000 | 5000 | 5000 | 4850 |
| Tens. mod. (x$10^3$ psi) | 352 | 318 | 445 | 343 | 314 | 287 | 312 | 399 | 348 | 364 | 300 | 347 | 335 | 318 | 321 |
| HDT (°C) | 72 | 70 | 68 | 69 | 71 | 72 | 70 | 76 | 71 | 67 | 67 | 65 | 67 | 71 | 67 |
| VHIT (in.-lb/mil) | 0.75 | 0.72 | 0.45 | 0.61 | 0.71 | 0.71 | 0.69 | 0.71 | 1.1 | 0.75 | 0.78 | 0.54 | 0.69 | 0.76 | 0.65 |

In Table IV the following changes were monitored for effects on physical properties: adding additional smoke suppressant; modifying the ratio of high:low IV PVC; varying impact modifier level; modifying the lubricant system by additional ester wax and polyol ester while eliminating HSA and OPE; adding a carboxylic acid; and boosting the level of lubricating processing aid. Example IV-2 demonstrated effects of removal of higher IV PVC, thereby boosting the concentration of the other additives. The smoke in the non-flaming smoke increased significantly with only a small increase in notched Izod impact strength and the HDT was somewhat reduced. In example IV-3 a mixture of $MgCO_3$ and $CACO_3$ was added in place of the high I.V. resin. This product had essentially the same effect on smoke as the high I.V. resin but negatively affected Izod impact, HDT and VHIT while the DTS time did improve. In example IV-4, additional $Sb_2O_3$ and molybdic oxide were added and the smoke density in the non-flaming mode was lowered but DTS was dramatically reduced. In example IV-16, a reduced level of high I.V. PVC was used with a higher level of impact modifier and added molybdic oxide, the compound exhibited improved Izod and smoke versus it's control Example IV-2 but DTS time was reduced. In compound IV-17, the high I.V. resin was removed and extra impact modifier added. The impact strength improved but smoke density in the non-flaming mode increased significantly compared with the control IV-1. In compound IV-18 the ESO level was increased versus Example IV-16. The smoke in the flaming mode increased significantly and the Izod and HDT were reduced. In Examples IV-19 and IV-20, Mg $CO_3$/CA $CO_3$ was added to the compound at 10 and 5 parts respectively. The best results were obtained using the 5 part loading level which gave good smoke and impact valves. In Example IV-21, the impact modifier was reduced versus control Example IV-1 and a lubricating, processing aid, stearic acid and additional polyol ester, ester wax and ESO were added while HSA and OPE were removed. The DTS increased dramatically but the Izod impact decreased, the smoke density increased and the HDT decreased. In Example IV-22 the impact modifier was increased and the high I.V. resin reduced versus IV-21, the DTS dropped dramatically, than smoke density was lowered in the flaming mode and the Izod impact increased. Example IV-23 is compared to IV-4 wherein the ESO was significantly increased, stearic acid was added and the second process aid was removed. The smoke density increased significantly, the Izod and HDT were reduced but the DTS time improved significantly. In Example IV-25 versus IV-4, high I.V. resin, stearic acid and ESO was added and $Sb_2O_3$ was removed. The smoke density in the non-flaming mode and HDT worsened but the DTS time increased significantly. In IV-26 versus IV-25 $Sb_2O_3$ was added and ESO reduced leading to somewhat higher smoke density in the flaming mode while HDT increased and Izod impact strength was reduced. In IV-27 versus IV-22, the 1.5 parts additional stearic acid was used. Surprisingly, the Izod impact increased significantly, the smoke density in non-flaming mode increased while the DTS was reduced slightly from 24 to 23 minutes. Overall, table demonstrates the desirability of employing a minor amount of PVC having higher I.V.; the use of molybdic oxide and $MgCO_3$/$CaCO_3$ even at low levels; the dramatic effect of stearic acid on impact strength; and the effect of high and low levels of impact modifier.

TABLE V-A

| Components* | Weight Parts | | | | | | | |
|---|---|---|---|---|---|---|---|---|
| * Henschel mixed | 1 | 2 | 3 | 4 | 5 | 6 | 7 | 8 |
| PVC (IV 0.52) | - | - | - | - | - | 75 | - | - |
| PVC (IV 0.68) | 80 | 80 | 80 | 80 | 80 | - | 80 | 80 |
| PVC (IV 0.92) | 20 | 20 | 20 | 20 | 20 | 25 | 20 | 20 |
| IM1 | 20 | 20 | 20 | 20 | 20 | 20 | 20 | 20 |
| PA1 | 2 | 2 | 2 | 2 | 2 | 2 | 2 | 2 |
| PA2 | 1 | 1 | 1 | 1 | 1 | 1 | 1 | 1 |
| mel. molybdate[1] | 2.5 | 2.5 | 2.5 | 2.5 | 2.5 | 2.5 | 2.5 | - |
| Cu oxalate | 1.1 | 1.1 | 1.1 | 1.1 | 1.1 | 1.1 | 1.1 | - |
| molybdic oxide | - | - | - | - | 1 | - | - | - |
| ammon. oct.[2] | - | - | - | - | - | - | - | 3.6 |
| ester Wax | 1 | 1 | 1 | 1 | 1 | 1 | 1 | 1 |
| polyol ester | 1 | 1 | 1 | 2.5 | 1 | 1 | 1 | 1 |
| HSA | 0.4 | 0.4 | 0.4 | 0.4 | 0.4 | 0.4 | 0.4 | 0.4 |
| OPE | .2 | .2. | .2 | .2 | .2 | .2 | .2 | .2 |
| Stearic Acid | - | 1 | - | - | - | - | - | - |
| paraffin wax | 1 | - | - | - | - | - | - | - |
| $CaCo_3$ | 5 | 5 | 5 | 5 | 5 | 5 | 5 | 5 |
| Tin 1 | 3 | 3 | 3 | 3 | 3 | 3 | 3 | 3 |
| ESO | 1 | 1 | 3 | 1 | 3 | 1 | 1 | 1 |
| $TiO_2$ | 2 | 2 | 2 | 2 | 2 | 2 | 2 | 2 |

[1] 7.4 % > 10 micron
[2] ammonium octamolybdate

TABLE V-B

| Test | Results | | | | | | | |
|---|---|---|---|---|---|---|---|---|
| | 1 | 2 | 3 | 4 | 5 | 6 | 7 | 8 |
| Dm Flaming | 349 | 347 | 381 | 321 | 326 | 313 | 353 | 294 |
| Dm Non-Flaming | 381 | 361 | 358 | 360 | 327 | 362 | 363 | 317 |
| Izod (23 ° C) ft-lb/in | 8.5 | 13.5 | 12.1 | 14.2 | 11.9 | 4.8 | 6.9 | 14.4 |
| Izod (-20 ° C) ft-lb/in | 3.8 | - | - | - | - | - | 3.5 | 6.8 |
| DTS Chart (min.) | 24 | 19 | 20 | 22 | 20 | 19 | 22 | 16 |
| VISC. (X $10^3$ Poise) | 16 | 16.6 | 16.4 | 16.4 | 15.3 | 11.6 | 17.3 | 16.9 |
| Equil. Torque (m-g) | 1050 | 1400 | 1400 | 1400 | 1400 | 1200 | 1200 | 1200 |
| Tens. Strength (psi) | 5650 | 5300 | 5400 | 5200 | 5450 | 5350 | 5550 | 5550 |
| Tens. Modulus (x$10^3$psi) | 360 | 331 | 337 | 351 | 344 | 342 | 350 | 351 |
| HDT ( ° C) | 72 | 71 | 68 | 72 | 68 | 71 | 72 | 72 |
| VHIT in.-lbs./mil | 0.75 | 0.52 | 0.52 | 0.48 | 0.48 | 0.42 | 0.77 | 0.85 |

In tables V-A and V-B, the effects of various lubricants are illustrated; the effect of added molybdic oxide; the effect of higher ESO levels; the effect of lower molecular weight PVC as the matrix phase; and the effect od using ammonium octamolybdate in addition to melamine molybdate and copper oxalate. Example V-7 is a control. Comparing V-1 to V-7, paraffin wax had almost no effect on smoke generation, while increased Izod impact strength and DTS time both improved slightly. Example V-2 in comparison with its control V-7 illustrates the surprising effect of adding one part of stearic acid wherein Izod impact strength at room temperature doubled, while DTS time was only sightly reduced and there was essentially no effect on smoke density. Example V-3 is compared to V-7 which shows that added ESO (3 parts vs. 1 part) increased smoke in the flaming mode, improved Izod impact strength and reduced HDT. Example V-4 is compared to V-6 showing the effect of only increasing the level of polyol ester (V-4) wherein Izod impact strength was improved with essentially no change in smoke density. Example V-5 is comparable to Example V-3 wherein an increased level of molybdic oxide was used, both having higher level of ESO, wherein the smoke density was significantly reduced along with only minor effects on other properties. In Example V-6, a 0.52 I.V. PVC resin was used (vs. 0.68 I.V) along with 25 parts of 0.92 I.V. resin. The smoke generation improved in the flaming mode, however, the Izod impact and DTS were reduced. Compound V-8 demonstrates the effects using onle a molybdenum compound as the smoke suppressant. Using ammonium octamolybdate without copper oxdate or melamine, molybdate compares with V-37 wherein the smoke density is significantly reduced, the Izod impact is dramatically improved, however, the DTS time is significantly reduced to 16 minutes.

TABLE VI-A

| | Banbury | | Buss | | |
|---|---|---|---|---|---|
| Components* | Wt. Parts | | | | |
| *hand-mixed | 1C | 2C | 1C | 2C | 2D |
| PVC (IV .68) | 95 | 95 | 95 | 95 | 95 |
| PVC (IV .92) | 5 | 5 | 5 | 5 | 5 |
| IM1 | 18 | 16 | 18 | 16 | 16 |
| PA2 | 3 | 2.7 | 3 | 2.7 | 2.7 |
| Mel. Molybdate | 2.5 | 2.6 | 2.5 | 2.6 | 2.6 |
| Cu Oxalate | 1.1 | 1.2 | 1.1 | 1.2 | 1.2 |
| ester Wax | 1 | 1.2 | 1 | 1.2 | 1.2 |
| polyol ester | 1.5 | 2.5 | 1.5 | 2.5 | 2.5 |
| HSA | 0.5 | - | - | - | - |
| OPE | 0.5 | 0.5 | 0.5 | 0.5 | 0.5 |
| Stearic Acid | - | 1.2 | - | 1.2 | 1.2 |
| Paraffin Wax | - | 0.5 | - | 0.5 | 0.5 |
| $CaCO_3$ | 5 | 5 | 5 | 5 | 5 |
| Tin 1 | 3 | 3 | 3 | 3 | 3 |
| ESO | 1.5 | 1.5 | 1.5 | 1.5 | 1.5 |
| $TiO_2$ | 2 | 2 | 2 | 2 | 2 |

TABLE VI-B

| | Banbury | | Buss | | |
|---|---|---|---|---|---|
| Test | Results | | | | |
| | 1C | 2B | 1C | 2C | 2D |
| $D_M$ Flaming | 555 | 428 | 385 | 382 | 387 |
| $D_M$ Non-Flaming | 432 | 476 | 351 | 415 | 451 |
| Izod (23 ° C) | 15.5 | 8.6 | 17.4 | 15.5 | 16.9 |
| Izod (-20 ° C) | 3.7 | 2.8 | 5.3 | 4.9 | 3.4 |
| DTS Chart (min.) | 24 | 30 | 21 | 25 | 26 |
| VISC. (x $10^3$ Poise) | 16.1 | 12.7 | 15.7 | 12.9 | 11.6 |
| Equil Torque (m-g) | 1100 | 1000 | 1100 | 1000 | 950 |
| Tens. Strength (psi) | 4950 | 5150 | 5400 | 5050 | 5500 |
| Tens. Modulus (X$10^3$ | psi) | 302 | 324 | 338 308 | 339 |
| HDT ( ° C) | 68 | 65 | 67 | 66 | 66 |
| VHIT in.-lb/mil | 0.8 | 0.4 | - | - | 0.57 |

In table VI-B, the data illustrates a dramatic effects on product properties of different processing methods in a side-by-side comparison of compositions. Comparing compounds Banbury 1C vs. Buss 1C, the compounding extrusion is surprisingly seen to give reduced smoke generation, increased Izod impact, increased tensile strength and modulus with only slightly reduced, but desirable DTS time of 21 minutes. The comparison of Banbury 2C to Buss 2-C indicated again a surprising reduction in smoke generation, a very significant increase in Izod impact with a somwhat reduced but very adequate DTS time of 25 minutes.

TABLE VII-A

| components* | WEIGHT PARTS | | | | | | | | | | | | | | |
|---|---|---|---|---|---|---|---|---|---|---|---|---|---|---|---|
| *hand-mixed | 1 | 2 | 3 | 4 | 5 | 6 | 7 | 8 | 9 | 10 | 11 | 12 | 13 | 14 | 15 |
| PVC (IV 0.68) | 80 | - | - | - | - | - | - | - | - | - | - | - | - | - | - |
| PVC (IV 0.72) | - | 95 | 95 | 95 | 100 | 90 | 09 | 95 | 95 | 95 | 95 | 95 | 95 | - | 95 |
| PVC (IV 0.92) | 20 | 5 | 5 | 5 | - | 10 | 10 | 5 | 5 | 5 | 5 | 5 | 5 | 20 | 5 |
| IM1 | 20 | 18 | 20 | 16 | 18 | 20 | 10 | 14 | 18 | 18 | 18 | 18 | 18 | 20 | 16 |
| PA1 | 2 | 1 | 2 | 1 | - | 2 | - | - | - | - | - | 2 | 2 | 2 | 1 |
| PA1 | 1 | 2 | 1 | 2 | 3 | 1 | 3 | 3 | 3 | 2 | 3 | - | - | 1 | 2 |
| Mel-Mo unmodified* | 2.5 | 2.5 | 2.5 | 2.5 | 2.5 | 2.5 | 2.5 | 2.5 | 2.5 | 2.5 | 2.5 | 2.5 | 2.5 | | |
| Mel-M0 modified* | | | | | | | | | | | | | | 2.5 | 2.5 |
| Cu Oxalate | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |
| ester wax | 1 | 1 | 1 | 1 | 1 | 1 | 2.5 | 2.5 | 2.5 | 1.5 | 1 | - | - | 1 | 1 |
| polyol ester | 1 | 1 | 1 | 1.5 | 1.5 | 1 | 2.5 | 2.5 | 2.5 | 1.5 | 1.5 | 1 | 1 | 1 | 1.5 |
| HSA | 0.4 | 0.4 | 0.4 | 0.4 | 0.5 | 0.4 | - | - | - | - | 0.5 | - | - | 0.4 | 0.4 |
| OPE | 0.2 | 0.2 | 0.2 | 0.2 | 0.5 | 0.2 | - | - | - | 1 | 0.5 | - | - | 0.2 | 0.2 |
| stearic acid | - | - | - | - | - | - | 1 | 1 | 1 | 1 | - | 1 | 0.8 | - | - |
| $CaCO_3$ | 5 | 5 | 5 | 5 | 5 | 5 | 5 | 5 | 5 | 5 | 5 | - | - | 5 | 5 |
| TIN1 | 3 | 3 | 3 | 3 | 3 | 3 | 3 | 3 | 3 | 3 | 3 | 3 | 3 | 3 | 3 |
| ESO | 1 | 3 | 1 | 1 | 1.5 | 1 | 2 | 2 | 2 | 1.5 | 1.5 | 0.5 | 3 | 1 | 1 |
| $TiO_2$ | 2 | 2 | 2 | 2 | 2 | 2 | 2 | 2 | 2 | 2 | 2 | 2 | 2 | 2 | 2 |
| ADDED LUBES** | - | - | - | - | - | - | - | - | - | ** | ** | ** | ** | - | - |

** Example 10 - 1 phr paraffin wax; Ex. 11- 1 phr antistat; Ex. 12 - 1 phr montan ester wax + 1 phr calcium stearate + 0.5 phr oxidized polyethylene; Ex. 13 - 1.5 phr mineral oil + 1.5 phr calcium stearate

* unmodified: 2.1μ median diameter; *modified: median diameter 9.7 μ, 2.9 %≥2μ

TABLE VII-B

| Test | Results | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Dm Flaming | 344 | 378 | 463 | 375 | 358 | 339 | 482 | 385 | 518 | 448 | 403 | 356 | 448 | 393 | 407 |
| Dm Non-Flaming | 393 | 431 | 335 | 306 | 394 | 335 | 447 | 478 | 509 | 453 | 389 | 430 | 483 | 362 | 405 |
| Izod (23°C) ft-lb/in | 14.9 | 13.0 | 13.2 | 11.9 | 13.3 | 14.2 | 4.9 | 11.3 | 11.9 | 15.6 | 14.7 | 12.7 | 11.6 | 13.7 | 13.2 |
| Izod (-20°C) ft-lb/in | 1.1 | 0.8 | 2.9 | 2.4 | 2.4 | 2.0 | 1.7 | 2.0 | 1.9 | 2.1 | 1.1 | 2.6 | 2.8 | 3.0 | 2.2 |
| DTS Chart (Min.) | 18 | 19 | 17 | 19 | 21 | 17 | 23 | 23 | 23 | 23 | 22 | 21 | 21 | 19 | 23 |
| VISC. (X $10^3$ Poise) | 18.1 | 17.2 | 19.1 | 16.4 | 14.7 | 18 | 12.8 | 13.4 | 13.5 | 13.2 | 13.6 | 16.5 | 16.4 | 16.6 | 15.9 |
| Equil Torque (m-g) | 1400 | 1400 | 1450 | 1350 | 1300 | 1500 | 1100 | 1100 | 1250 | 1200 | 1300 | 1400 | 1400 | 1400 | 1400 |
| Tens. Strength (psi) | 5200 | 5350 | 5300 | 5500 | 5300 | 5250 | 5500 | 5400 | 5000 | 4950 | 5000 | 5450 | 5300 | 5150 | 5450 |
| Tens. Mod. (X $10^3$ psi) | 276 | 282 | 283 | 291 | 277 | 278 | 334 | 281 | 265 | 254 | 266 | 312 | 279 | 281 | 293 |
| HDT (°C) | 68 | 66 | 69 | 68 | 65 | 68 | 65 | 64 | 66 | 67 | 66 | 69 | 63 | 68 | 66 |
| VHIT in.-lb./mil | 0.43 | 0.46 | 0.57 | 0.48 | 0.32 | 0.31 | - | - | - | 0.56 | 0.60 | 0.57 | 0.63 | - | - |

In table VII, the effects of changes in impact modifier level, amount of high I.V. PVC resin, lubricant system and coarse fraction of the molybdate were studied. In compound VII-2 vs. VII-1, the fraction of high I.V. resin was reduced and the I.V. of the base resin increased from 0.68 to 0.72, well as, the level of impact modifier was reduced slightly and the level of lubricating process aid (PA2) and ESO was increased. The smoke generation increased and the DTS time increased slightly. In compound VII-3 vs. VII-2, the impact modifier was increased and the levels of lubricating process aid and ESO were reduced. The smoke

generation increased in the flaming mode and decreased in the non-flaming mode while the low temperature Izod increased. In compound VII-4 vs. VII-3 the level of impact modifier was decreased and the level of lubricating process aid and polyol ester was increased. The smoke density decreased and DTS increased with only a small drop in impact strength.

Overall, those smoke suppressed compounds of the invention containing preferred amounts of components, as illustrated in Table VII-A, show a favorable combination of impact strength, smoke density and DTS time. Added carboxylic acid increases the DTS while not drastically increasing smoke density or lowering of impact strength (VII-10).

**TABLE VIII-A**

| Components* | Weight Parts | | | | | | | | | |
|---|---|---|---|---|---|---|---|---|---|---|
| *hand-mixed | 1 | 2 | 3 | 4 | 17 | 21 | 22 | 23 | 24 | 25 |
| PVC (IV .68) | 80 | 80 | 80 | 80 | 80 | - | 80 | 80 | 80 | 80 |
| PVC (IV .92) | 20 | 20 | 20 | 20 | 20 | 20 | 20 | 20 | 20 | 20 |
| IM1 | 20 | 20 | 20 | 20 | 20 | 20 | 20 | 20 | 20 | 20 |
| PA1 | 2 | 2 | 2 | 2 | 2 | 2 | 2 | 2 | 2 | 2 |
| PA2 | 1 | 1 | 1 | 1 | 1 | 1 | 1 | 1 | 1 | 1 |
| Mel-Mo* | 2.5 | 2.5 | 2.5 | 2.5 | 2.5 | 2.5 | 2.5 | 2.5 | 2.5 | 2.5 |
| Cu-1[1] | | | | - | 1.1 | | | | | 1.1 |
| Cu-1[2] | 1.1 | - | - | - | - | 1.1 | - | - | - | - |
| Cu-2[3] | - | - | 1.1 | | - | - | - | 1.1 | - | - |
| CU-3[4] | - | - | - | 1.1 | - | - | - | | 1.1 | - |
| Cu-4[5] | - | 1.1 | - | - | - | - | 1.1 | | | - |
| Ester Wax | 1 | 1 | 1 | 1 | 1 | 1 | 1 | 1 | 1 | 1 |
| Polyolester | 1 | 1 | 1 | 1 | 1 | 1 | 1 | 1 | 1 | 1 |
| HSA | 0.4 | 0.4 | 0.4 | 0.4 | 0.4 | 0.4 | 0.4 | 0.4 | 0.4 | 0.4 |
| OPE | 0.2 | 0.2 | 0.2 | 0.2 | 0.2 | 0.2 | 0.2 | 0.2 | 0.2 | 0.2 |
| $CaCO_3$ | 5 | 5 | 5 | 5 | 5 | - | - | - | - | - |
| Tin 1 | 3 | 3 | 3 | 3 | 3 | 3 | 3 | 3 | 3 | 3 |
| ESO | 1 | 1 | 3 | 1 | 3 | 1 | 1 | 1 | 1 | 1 |
| $TiO_2$ | 2 | 2 | 2 | 2 | 2 | 2 | 2 | 2 | 2 | 2 |

* un-modified melamine molybdate; [1] "Cu-1"(copper oxalate)- 23 % of particles > 10μ; [2] 9% > 10μ; [3] 4.8% > 10μ [4] 26% > 10μ; [5] 2.1% >10μ

**TABLE VIII-B**

| Test | Results | | | | | | | | | |
|---|---|---|---|---|---|---|---|---|---|---|
| | 1 | 2 | 3 | 4 | 17 | 21 | 22 | 23 | 24 | 25 |
| Dm Flaming | 376 | 392 | 348 | 429 | 330 | 348 | 313 | 408 | 350 | 327 |
| Dm Non-Flaming | 344 | 386 | 315 | 341 | 326 | 350 | 363 | 320 | 345 | 318 |
| Izod (23°C) ft-lb/in | 13.4 | 15.0 | 15.0 | 10.5 | 11.8 | 11.6 | 13.7 | 14.7 | 4.7 | 8.2 |
| Izod (-20°C) ft-lb/in | 2.4 | 2.0 | 0.7 | 1.5 | 2.8 | 3.0 | 5.4 | 3.3 | 1.6 | 3.3 |
| DTS Chart (Min.) | 24 | 22 | 19 | 22 | 22 | 21 | 21 | 19 | 19 | 22 |
| VISC. (x $10^3$ Poise) | 17.0 | 16.9 | 18.1 | 18 | 17.4 | 16.9 | 15.7 | 16.3 | 18.1 | 17.0 |
| Equil Torque (m-g) | 1050 | 1050 | 1200 | 1200 | 1200 | 1150 | 1200 | 1200 | 1200 | 1200 |
| Tens. Strength (psi) | 5450 | 5100 | 5250 | 5050 | 5500 | 5800 | 5700 | 5750 | 5750 | 6050 |
| Tens. Mod. (x$10^3$psi) | 323 | 328 | 346 | 325 | 329 | 340 | 325 | 321 | 326 | 334 |
| HDT (°C) | 68 | 68 | 67 | 66 | 71 | 72 | 73 | 72 | 72 | 72 |
| VHIT in.-lb./mil | 0.57 | 0.57 | 0.57 | 0.57 | 0.63 | 0.59 | 0.64 | 0.59 | 0.55 | 0.59 |

Table VIII illustrates the effects of particle characteristics of copper carboxylate. Although the mean particle diameter for the 5 different copper carboxylates does not vary greatly, being in a range of from 1 to 5 microns, is shown that both smoke density and impact strength are significantly affected by the percent of particles larger than 10 microns. Cu-1 had a mean diameter of 0.93 micron; Cu-2 had a mean diameter of 1.04; Cu-3 had a mean diameter of 0.64 microns; Cu-4 had a mean diameter of 5.9 micron and Cu-5 had a mean diameter of 2.4 micron. The fraction of particles having a diameter larger than 10 micron varied significantly. In those Examples wherein a copper carboxylate used had less than 30% fraction of particles greater than or equal to 10 microns performed better. In those compounds using copper carboxylate having less than 10% fraction of particles greater than or equal to 10 microns performed best. Table VIII also illustrates the sacrifice in physical properties when $CaCO_3$ is eliminated.

Various changes and modifications may be made in carrying out the present invention without departing from the spirit and scope thereof. For example, extruder screws can be designed to provide reduced shear and more packing capacity at the rear to accommodate the powder compounds used herein. Screw manufacture is beyond the scope of the present invention. Insofar as changes are within the preview of the amended claims, they are to be considered part of the invention.

## Claims

1. A polyvinyl chloride compound exhibiting an unannealed heat distortion temperature at 66 psi (HDT) of at greater than 58°C, comprising: polyvinyl chloride, at least one smoke suppressant containing an element selected from the group consisting of molybdenum, iron, copper, zinc, vanadium, lithium, sodium, potassium, magnesium, calcium, barium, zirconium, manganese, phosphorous, aluminum, antony, chromium, boron, tin and titanium including mixtures, at least one stabilizer for polyvinyl chloride, and a lubricant system comprising a polyol ester, a chemically modified paraffin wax, and an ester of a $C_8$ to $C_{30}$ carboxylic acid.

2. The compound of claim 1 wherein said polyol ester is present at from 0.1 to 10 parts by weight per 100 weight parts of polyvinyl chloride (phr), said wax is present at from 0.1 to 5 phr, and said ester is present at from 0.1 to 5 phr.

3. The compound of claim 2 wherein said polyol ester is present at from 0.8 to 3 phr, said wax is present at from 0.2 to 1 phr, and said ester is present at from 0.5 to 2 phr.

4. The compound of claim 3 wherein said polyol ester is present at from 1.2 to 2.8 phr, said wax is present at from 0.25 to 0.75 phr, and said ester is present at from 0.7 to 1.5 phr.

5. The compound of claim 2 wherein said lubricant system further comprises from a $C_8$ to $C_{30}$ carboxylic acid.

6. The compound of claim 5 wherein said carboxylic acid is present at from 0.1 to 5 phr.

7. The compound of claim 5 wherein said lubricant system further comprises a hydrocarbon wax.

8. The compound of claim 7 wherein said hydrocarbon wax is present at from 0.1 to 5 phr.

9. The compound of claim 1 wherein said lubricant system is present at from 1 to 15 phr.

10. The compound of claim 5 wherein said lubricant system is present at from 2 to 10 phr.

11. The compound of claim 7 wherein said lubricant system is present at from 2.5 to 8 phr.

12. The compound of claim 11 wherein said lubricant system is present at from 3 to 7.5 phr.

13. The compound of claim 1 wherein said stabilizer contains an element selected from the group consisting of tin, lead, barium, cadmium, zinc, and calcium containing stabilizers.

14. The polyvinyl chloride compound of claim 1 further comprising at least one impact modifier selected from the group consisting of ABS, CPE, MBS, and acrylic polymeric impact modifiers.

15. The polyvinyl chloride compound of claim 14 wherein the impact modifier consists acrylic polymeric impact modifier present at from 4 to 8 phr.

16. The polyvinyl chloride compound of claim 5 wherein said carboxylic acid is selected from the group consisting of undecylic acid, lauric acid, myristic acid, palmitic acid, margaric acid, stearic acid, oleic acid, ricinoleic acid, behenic acid, chlorocaproic acid, hydroxy, stearic acid, and hydroxy capric acid.

17. The polyvinyl chloride compound of claim 1 wherein said polyol ester is selected from the group consisting of ethylene glycol esters, glycerol esters, propylene glycol esters, oligomeric ethylene glycol esters, oligomeric propylene glycol esters and oligomeric glycerol esters, including mixtures.

18. The polyvinyl chloride compound of claim 17 wherein said polyol ester is selected from the group consisting of glycerol mono 2-ethylhexanoate, glycerol monostearate, glycerol monooleate, diglycerol monostearate, diglycerol monooleate, triglycerol monostearate, ethylene glycol distearate, hexaglycerol monostearate, and hexaglycerol distearate.

**19.** The polyvinyl chloride compound of claim 1 wherein said polyvinyl chloride has an inherent viscosity of from 0.4 to 1.4.

**20.** The polyvinyl chloride compound of claim 19 wherein said polyvinyl chloride has an inherent viscosity of from 0.45 to 0.95.

**21.** The polyvinyl chloride compound of claim 1 wherein said polyvinyl chloride consists of a first and a second polyvinyl chloride, said first polyvinyl chloride has an inherent viscosity (I.V.) of from 0.1 to about 2.0 units higher than said second polyvinyl chloride, and wherein said first polyvinyl chloride is present at less than 50 weight percent of the polyvinyl chloride.

**22.** The polyvinyl chloride compound of claim 21 wherein said first polyvinyl chloride has an I.V. of from 0.8 to 2.0.

**23.** The polyvinyl chloride compound of claim 21 wherein said first polyvinyl chloride has an I.V. of from 0.15 to 0.35 I.V. units higher than said second polyvinyl chloride.

**24.** The polyvinyl chloride compound of claim 1 further comprising a co-stabilizer for PVC selected from the group consisting of phosphite stabilizers, polymeric phosphites, thioesters, beta-diketones and epoxy materials.

**25.** The polyvinyl chloride compound of claim 24 wherein said co-stabilizer is an epoxy containing material selected from the group consisting of glycidyl ether of polyhydric alcohol, epoxidized vegetable oil, glycidyl ether of bisphenol-A, and
an epoxy ether having the formula:

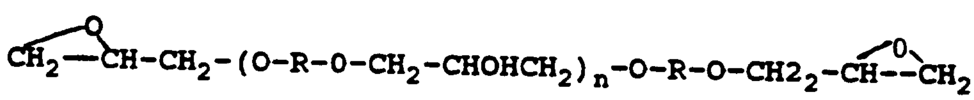

wherein n is an integer from 1 to 20, and R represents the divalent hydrocarbon radical of a substituted or unsubstituted dihydric phenol.

**26.** The polyvinyl chloride compound of claim 24 wherein said co-stabilizer is present at from 0.1 to 10 phr.

**27.** The polyvinyl chloride compound of claim 26 wherein said co-stabilizer is present at from 0.3 to 5 phr.

**28.** The polyvinyl chloride compound of claim 1 further comprising a plasticizer present at from 0.1 to 10 phr.

**29.** The polyvinyl chloride compound of claim 28 wherein said plasticizer is present at from 1 to 2 phr.

**30.** The polyvinyl chloride compound of claim 21 wherein said first polyvinyl chloride is present at from 3 to 7 weight parts per 100 weight parts of polyvinyl chloride.

**31.** The polyvinyl chloride compound of claim 1 in the form of an extruded sheet extruded through a die having a width of at least 30 inches.

**32.** The polyvinyl chloride compound of claim 1 in the form of an extruded sheet extruded through a die having a width of at least 48 inches.

**33.** The polyvinyl chloride compound of claim 1 in the form of an injection molded article.

**34.** A process for improving the dynamic thermal stability and impact strength of a polyvinyl chloride article containing at least one dispersed particulate smoke suppressant, comprising the steps of: combining polyvinyl chloride, at least one stabilizer for polyvinyl chloride, and a lubricant system comprising from 0.1 to 10 parts by weight per 100 weight parts of polyvinyl chloride (phr) of a polyol ester, from 0.1 to 5

phr of a chemically modified paraffin wax, and from 0.1 to 5 phr of an ester of a $C_8$ to $C_{30}$ carboxylic acid (ester) in a mixing step to form a compound, and fusing said compound under heating and shearing means to form an article.

**35.** The process of claim 34 wherein said heating and shearing means is selected from the group consisting of banbury mixing, single screw extrusion, twin screw extrusion and injection molding.

**36.** The process of claim 34 further comprising the process of forming an extrudate from said article in the form of a sheet.

**37.** The process of claim 34 further comprising the step of thermoforming said sheet into a shaped article.

**38.** The use of the process of claim 37 for forming an article selected from the group consisting of a shower stall, wall panel, tub enclosure, refrigerator panel, appliance housing, electrical housing, sporting equipment, plumbing ware, automotive component, business machine components and business machine housing.

**39.** A smoke suppressed polyvinyl chloride composition exhibiting a smoke density ($D_m$) as measured per ASTM E662 of less than 500, comprising polyvinyl chloride and a particulate smoke suppressant containing an element selected from the group consisting of molybdenum, iron, copper, zinc, vanadium, lithium, sodium, potassium, magnesium, calcium, barium, zirconium, manganese, phosphorous, aluminum, antimony, chromium, boron, tin and titanium including mixtures, wherein the fraction of smoke suppressant particles having a diameter equal to or greater than 10 microns is less than 30%, at least one stabilizer for polyvinyl chloride, and a lubricant system comprising a polyol ester.

**40.** A method of improving the physical properties of a smoke suppressed polyvinyl chloride compound containing a particulate molybdenum based smoke suppressant, comprising: using a means for limiting the fraction of said molybdenum particles having a particle diameter equal to or greater than 10 microns to less than 7%, as measured by a Micromeritics, Inc. Sedigraph® analyzer.

**41.** The method of claim 40 wherein the means for limiting the fraction of said particles is selected from the group consisting of grinding milling, and jet milling.

**42.** The method of claim 40 wherein the fraction of molybdenum particles equal to or greater than 6 microns is less than 6%

**43.** The method of claim 40 further comprising the step of incorporating two polyvinyl chloride polymers having differing molecular weights, wherein the higher molecular weight PVC is present in an amount of less than 25 parts per 100 weight parts of PVC (phr).

**44.** The method of claim 40 including the step of incorporating from 2 to less than about 10 phr of $CaCO_3$.

**45.** The method of claim 40 further comprising the step of incorporating a lubricating acrylic processing aid.

**46.** The method of claim 40 wherein said molybdenum based compound is an organo molybdate.

**47.** The method of claim 46 wherein said organo molybdate is melamine molybdate.

**48.** The method of claim 40 wherein said polyol ester is selected from the group consisting of ethylene glycol esters, glycerol esters, propylene glycol esters, oligomeric ethylene glycol esters, oligomeric propylene glycol esters and oligomeric glycerol esters, including mixtures.